# EUROPÄISCHE PATENTSCHRIFT

(11) **EP 0 656 958 B1**
(45) Veröffentlichungstag und Bekanntmachung des Hinweises auf die Patenterteilung: **07.04.1999**
(21) Anmeldenummer: 94919651.3
(22) Anmeldetag: 21.06.1994
(51) Int. Cl.: C23C 22/68, C08G 61/12

(54) **VERFAHREN ZUR HERSTELLUNG KORROSIONSGESCHÜTZTER METALLISCHER WERKSTOFFE**
METHOD OF MANUFACTURING METAL COMPONENTS PROTECTED AGAINST CORROSION
PROCEDE DE PRODUCTION DE MATERIAUX METALLIQUES ANTICORROSION

(30) Priorität: 25.06.1993 DE 4321615; 07.07.1993 DE 4323333; 20.07.1993 DE 4324345; 20.07.1993 DE 4324346; 16.09.1993 DE 4332020; 06.10.1993 DE 4334628
(43) Veröffentlichungstag der Anmeldung: 14.06.1995
(73) Patentinhaber: Zipperling Kessler & Co (GmbH & Co), D-22926 Ahrensburg (DE)
(72) Erfinder: WESSLING, Bernhard, D-22941 Bargteheide (DE)
(74) Vertreter: UEXKÜLL & STOLBERG
(86) Internationale Anmeldenummer: EP9402023
(87) Internationale Veröffentlichungsnummer: WO9500678

(56) Entgegenhaltungen:
- WO-A-89/02155
- WO-A-90/10095
- WO-A-93/14166
- DE-A- 3 834 526
- FR-A- 2 679 240
- JOURNAL OF THE ELECTROCHEMICAL SOCIETY, Bd.132, 1985, NEW HAMPSHIRE, USA Seiten 1022 - 1026 DEBERRY 'Modefication of the Electrochemical and Corrosion Behavior of Stainless Steels with an Electroactive Coating' in der Anmeldung erwähnt
- JOURNAL OF THE ELECTROCHEMICAL SOCIETY, Bd.132, 1985, NEW HAMPSHIRE, USA, Seiten 1022-1026; DEBERRY:'Modefication of the Electrochemical and Corrosion Behavior of Stainless Steels with an Electroactive Coating'

## Beschreibung

Die Erfindung betrifft ein Verfahren zur Herstellung korrosionsgeschützter metallischer Werkstoffe durch Passivierung sowie die Verwendung eines intrinsisch leitfähigen Polymers zum Korrosionsschutz von metallischen Werkstoffen. Die Passivierung von Metallen, insbesondere von Aluminium, ist bekannt. Aluminium wird, wenn auch in unzureichendem Maße, durch Reaktion mit Luftsauerstoff passiviert. Im großtechnischen Maßstab wird zu seiner Passivierung die elektrolytische Oxidation angewendet (Eloxal-Verfahren), bei der der Stromverbrauch und die Anwendung giftiger Chemikalien jedoch aus ökologischen Gründen nachteilig sind.

Die elektrolytische Passivierung von Eisen und Stahl ist bisher praktisch nicht möglich bzw. nur unzureichend realisierbar. Stahl ist als Edelstahl durch die Anwesenheit von unter anderem Chromoxiden in saurem Milieu passiv, aber gegenüber Lochfraß sehr anfällig, da keine dichte, homogene Passivschicht vorliegt. Eisen kann durch starke Säuren temporär gegen Säureangriff passiviert werden, die Passivschicht ist aber sehr leicht verletzbar.

Der Korrosionsschutz von Stahl ist nach wie vor ein enormes ökologisches und durch die Zerstörung von Tragkonstruktionen, Maschinen und Bauwerken außerdem ein großes wirtschaftliches Problem. Nach wie vor muß man Stahl durch Decklacke im wesentlichen passiv schützen, d.h. den Zutritt von Wasser und Sauerstoff sowie von Salzen verhindern. Besonders aber in Spalten, an Verletzungsstellen der Lacke und aufgrund von Alterung versagen die herkömmlichen Lacke und müssen daher in regelmäßigen Abständen erneuert werden. In gewisser Hinsicht gelingt ein "aktiver" Schutz durch Verzinken, wobei das Eisen als Kathode wirkt und somit kathodisch geschützt wird; ein kathodischer Schutz findet ebenfalls durch den Einsatz von Opfer-Anoden oder durch Anlegen einer entsprechenden Spannung statt.

Beobachtungen über eine Korrosionsschutz-Wirkung von intrinsisch leitfähigen Polymeren, hier vor allem von Polyanilin, sind in früheren Jahren mehrfach gemacht worden. So berichtete A. McDiarmid auf einer Konferenz (ICSM 1986, Kyoto) im Rahmen eines Vortrages über die elektrochemische Abscheidung von Polyanilin unter anodischem Potential auf Stahl und über die Beobachtung, daß die elektrochemisch beschichtete Stahlplatte gegen Korrosion widerstandsfähiger war als eine unbeschichtete Stahlplatte. Diese Beobachtung machte auch D. DeBerry bei rostfreiem Stahl, auf dessen Oberfläche Polyanilin elektrochemisch abgeschieden worden war (J. Elektrochem. Soc. 132, 1022 (1985)). Die Nachteile dieser Verfahrensweise sind darin zu sehen, daß
a) eine elektrochemische Beschichtung mit Polyanilin in kommerziellem Maßstab praktisch undurchführbar ist, und
b) nicht geklärt werden konnte, was die Ursache für den beobachteten Korrosionsschutzeffekt war.

In der WO 89/02155 sind erstmalig polyanilinhaltige Lack-Dispersionen vorgeschlagen worden, mit denen ein Korrosionsschutz-Effekt erzielt werden konnte. Das beschriebene Verfahren zum Korrosionsschutz und die vorgeschlagenen Formulierungen haben sich jedoch in der Praxis nicht durchsetzen können, da
a) der Korrosionsschutz-Effekt nicht befriedigend und nicht ausreichend reproduzierbar war,
b) die Lack-Formulierungen den Anforderungen der Lack- und Beschichtungs-Industrie, z.B. hinsichtlich Streichverhalten, Lackhaftung, Porenbildung, Wasser- und Sauerstoff-Migrationswerten, nicht gerecht werden konnten.

Unter anderem angeregt durch die Beobachtungen von A. McDiarmid führte eine Arbeitsgruppe der Los Alamos Laboratorien im Auftrag der N.A.S.A. ebenfalls Korrosionsuntersuchungen mit Polyanilin-beschichteten Stählen durch. Diese Arbeitsgruppe beschichtete Stahlplatten mit neutralem und nicht-leitfähigem Polyanilin aus Lösung, führte anschließend eine "Dotierung" mit verschiedenen "Dotierungs"-Mitteln durch und beschichtete diese Composite-Struktur mit Korrosionsschutz-Lack. Eine Zusammenfassung der Ergebnisse der Arbeiten findet man im Projekt-Report LA-UR-92-360 der Los Alamos National Laboratories (K. Thompson et al., 1991). Mit diesem Verfahren konnten die Los Alamos Laboratorien zwar einen gewissen Korrosionsschutz-Effekterzielen, sie erreichten aber nicht das Ziel, in der korrosiven Atmosphäre startender Booster bei Raumfähren-Starts die Stahlkonstruktion zuverlässig gegen HCl zu schützen. Insbesondere die Reproduzierbarkeit des Korrosionsschutz-Effektes ließ stark zu wünschen übrig; überdies wurden keine Angaben über eine eventuelle Verschiebung des Korrosionspotentials gemacht. So argumentieren die Autoren u.a., daß die Wirkung des Korrosionsschutzes von der chemischen Natur des Dotierungsmittels abhinge. Insgesamt erlaubt das Verfahren keine kommerzielle Durchführung, da der Korrosionsschutz-Effekt nicht reproduzierbar und quantitativ darstellbar und die Haftung der Decklackschicht ungenügend ist.

1991 hat eine Arbeitsgruppe der Firmen Zipperling & Co (Ahrensburg, Deutschland), Americhem Inc. (Akron, Ohio, USA) und Allied Signal (Morristown, New Jersey, USA) verschiedene Formulierungen für Korrosionsschutz-Lacke entwickelt, die zur Patentanmeldung PCT/US93/00543 (WO 93/14166) führten. Die Erfinder konnten darauf hinweisen, daß in einem systematisch angelegten Salzsprühtest nach ASTM B-117 die verschiedenen polyanilinhaltigen Lack-Formulierungen eine Verminderung der Korrosionsgeschwindigkeit bewirkten. Allerdings standen bisher der praktischen Anwendung der dort vorgeschlagenen Lack-Formulierungen mehrere Nachteile gegenüber:
a) die hohen Produktionskosten aufgrund der erforderlichen langen Dispersionszeit des Polyanilins in der Lack-Formulierung,
b) eine schlechte Reproduzierbarkeit der Korrosionsschutz-Ergebnisse bei der Übertragung aus dem Labor-Maßstab in größere, praktische Versuchs-Maßstäbe,
c) bei deutlich gestiegenen Lack- und Beschichtungskosten aus Sicht von Korrosionsschutz-Praktikern nur geringfügige Korrosionsschutz-Vorteile,
d) die zum Teil sehr geringe Lackhaftung und somit eine Verstärkung des Korrosionsangriffs durch Unterwanderung bei den meisten polyanilinhaltigen Formulierungen.

In der DE-A-38 34 526 wird die Beschichtung von unterschiedlichen Metallen mit intrinsisch leitfähigen Polymeren beschrieben. Als mögliche Anwendungsgebiete der fertigen Beschichtungen sind u.a. antistatische und leitfähige Modifizierung von Oberflächen, Korrosionsschutz, Kondensation und elektronische Bauelemente genannt.

Der Erfindung liegt daher die Aufgabe zugrunde, den in verschiedenen, voneinander unabhängigen Laboruntersuchungen beobachteten Korrosionsschutz-Effekt mit intrinsisch leitfähigen Polymeren durch ein präzise angebbares Verfahren eindeutig und ausnahmslos reproduzierbar zu gestalten, den Korrosionsschutz-Effekt steuerbar zu machen und korrosionsgeschützte metallische Werkstoffe zur Verfügung zu stellen, bei welchen die Korrosionsgeschwindigkeit gegenüber konventionellen Korrosionsschutz-Systemen um mindestens 50% vermindert ist.

Diese Aufgabe wird durch das Verfahren gemäß Ansprüchen 1 bis 11 gelöst. Die Erfindung betrifft außerdem die Verwendung nach Anspruch 12.

Das erfindungsgemäße Verfahren zur Herstellung korrosionsgeschützter metallischer Werkstoffe und die erfindungsgemäße Verwendung eines intrinsisch leitfähigen Polymers zum Schutz von metallischen Werkstoffen vor Korrosion zeichnen sich dadurch aus, daß man die nachstehend definierten Schritte (a) und (b) und gegebenenfalls die Schritte (c), (d) und/oder (e) durchführt, nämlich
(a) aus einer Dispersion eines intrinsisch leitfähigen und wasseraufnahmefähigen Polymer, das ein Redox-Potential gegen Normal-Wasserstoff-Elektrode von -300 bis +1800 mV aufweist, eine Schicht des Polymers auf einen metallischen Werkstoff in nicht-elektrochemischer Weise aufbringt, wobei das Polymer eine Wasseraufnahmefähigkeit von mindestens 0,5 Gew.-%, bezogen auf das Trockengewicht der aufgebrachten Polymerbeschichtung, aufweist und
(b) den gemäß Schritt (a) beschichteten metallischen Werkstoff in Kontakt mit einem Passivierungsmedium mit Gehalt an sauerstoffhaltigem Wasser für einen Zeitraum von mindestens 30 Sekunden und vorzugsweise bis zum Erreichen des Gleichgewichtspotentials bringt,
und man nach Durchlaufen der Schritte (a) und (b)
(c) gegebenenfalls eine Nachpassivierung vornimmt, indem der metallische Werkstoff für eine Dauer von mindestens 1,5 Minuten auf ein Potential gebracht wird, welches um 50 bis 500 mV negativer (gegen Normal-Wasserstoff-Elektrode) ist als das Gleichgewichtspotential des mit dem leitfähigen Polymer beschichteten metallischen Werkstoffs, wobei stromlos oder mit weniger als 2 mA/cm² gearbeitet wird,
(d) gegebenenfalls die Schicht des intrinsisch leitfähigen Polymer entfernt und
(e) gegebenenfalls den metallischen Werkstoff mit einem Korrosionsschutz-Überzug versieht.

### Verfahrensschritt (a)

Zur Durchführung des erfindungsgemäßen Verfahrens wird zunächst in Verfahrensschritt (a) ein intrinsisch leitfähiges und wasseraufnahmefähiges Polymer in neutraler und bevorzugt in dotierter, insbesondere protonierter, Form auf das metallische Substrat, wie z.B. Stahl, Edelstahl, Kupfer, Aluminium oder Bronze oder andere Legierungen, in nicht elektrochemischer Weise aufgebracht.

Unter dem Begriff "intrinsisch leitfähige Polymere" werden solche organischen Polymere verstanden, die polykonjugierte Bindungssysteme (z.B. Doppelbindungen, aromatische bzw. heteroaromatische Ringe oder Dreifachbindungen) aufweisen. Beispiele für solche Polymere sind Polydiacetylen, Polyacetylen (PAc), Polypyrrol (PPy), Polyanilin (PAni), Polythiophen (PTh), Polyisothianaphthen (PITN), Polyheteroarylenvinylen (PArV), wobei die Heteroarylen-Gruppe z.B. Thiophen oder Pyrrol sein kann, Poly-p-phenylen (PpP), Polyphenylensulfid (PPS), Polyperinaphthalin (PPN), Polyphthalocyanin (PPhc) sowie deren Derivate (die z.B. aus substituierten Monomeren aufgebaut sind), deren Copolymere und deren physikalische Mischungen. Sie können in verschiedenen Zuständen vorliegen, die durch jeweils unterschiedliche Summenformeln beschrieben werden und durch (elektro-)chemische Reaktionen wie Oxidation, Reduktion, Säure-/Basereaktion oder Komplexbildung zumeist im wesentlichen reversibel ineinander überführt werden können. Diese Reaktionen werden in der Literatur gelegentlich auch als "Dotierung" bzw. "Kompensation" bezeichnet oder können als "Beladung" und "Entladung" analog zu den elektrochemischen Prozessen in Batterien angesehen werden. Zumindest einer der möglichen Zustände ist elektrisch sehr gut leitfähig, z.B. mit einer Leitfähigkeit von mehr als 1 S/cm (als reiner Stoff), so daß von intrinsisch leitfähigen Polymeren gesprochen werden kann.

Einen guten Überblick über bis heute bereits synthetisierte intrinsisch leitfähige Polymere, die erfindungsgemäß geeignet sind, findet man in Synthetic Metals, Hefte 17, 18 und 19 (1987).

Als intrinsisch leitfähige Polymere werden solche eingesetzt, die ein Redoxpotential von -300 bis +1800 mV, gemessen gegen Normal-Wasserstoff-Elektrode, haben. Vorzugsweise wird als intrinsisch leitfähiges Polymer Polyanilin (z.B. kommerziell umter dem Handelsnamen VERSICON erhältliches Polyanilin, Hersteller: Allied Signal, Morristown, NJ, USA) eingesetzt.

Als Dotierungsmittel werden bevorzugt anorganische oder organische Säuren, inbesondere Phosphorsäure, Salzsäure, Schwefelsäure, organische Sulfonsäuren, wie para-Toluolsulfonsäure, Dodecylbenzolsulfonsäure, Benzolsulfonsäure oder Methansulfonsäure, oder Essigsäure, eingesetzt.

Die Wasseraufnahmefähigkeit der eingesetzten Polymeren beträgt vorzugsweise mindestens 1,0 Gew.-%, bezogen auf das Trockengewicht der aufgebrachten Polymerbeschichtung.

Die Aufbringung des Polymeren erfolgt in nicht-elektrochemischer Weise. Das bedeutet, daß elektrischer Strom zum Abscheiden des Polymer auf dem Metal nicht verwendet wird. Stattdessen kann das Polymer bei der erfindungsgemäßen Beschichtungsweise beispielsweise dadurch aufgebracht werden, daß das Substrat mit einer Dispersion von dem ausgewählten Polymeren, wie Polyanilin, in organischen Lösungsmitteln oder Wasser in Kontakt gebracht wird. Derartige Dispersionen sind in der DE-A-38 34 526 beschrieben. Praktische Versuche haben gezeigt, daß die erhaltenen Polymerbeschichtungen vorteilhafterweise eine Dicke von mindestens 30 nm haben sollten. Zur Erzielung einer solchen Beschichtungsstärke führt man die Beschichtung mit z.B. einer Polyanilin--Dispersion mehrfach hintereinander aus. Dabei wird vorzugsweise so vorgegangen, daß das Substrat kurz in die polymerhaltige Dispersion eingetaucht und anschließend getrocknet wird. Dieser Beschichtungs- und Trocknungsvorgang wird vorzugsweise mindestens 2-3 mal wiederholt. Es hat sich gezeigt, daß mehr als 5 bis 10 Beschichtungsvorgänge in Kombination mit den weiteren Verfahrensschritten zu keiner Verbesserung des Korrosionsschutz-Effektes mehr führen.

Alternativ kann das Polymer auch aufgebracht werden, indem man die Dispersion so lange auf das metallische Substrat einwirken läßt, bis die gewünschte Schichtdicke aufgebaut ist.

Es ist ebenfalls möglich, daß anstelle der reinen intrinsisch leitfähigen Polymere wasseraufnahmefähige Polymerblends mit einem Gehalt von vorzugsweise 0,1 bis 45 Gew.-% und besonders bevorzugt 5 bis 35 Gew.-% intrinsisch leitfähigem Polymer eingesetzt werden.

Ebenso wie die reinen Polymere haben die einsetzbaren Polymerblends eine Wasseraufnahmefähigkeit von mindestens 0,5 Gew.-% und besonders bevorzugt mindestens 1,0 Gew.-%, bezogen auf das Trockengewicht der Polymerblendbeschichtung.

Neben intrinsisch leitfähigem Polymer enthalten die erfindungsgemäß eingesetzten Polymerblends weitere Polymere, Copolymere oder Polymermischungen, wie z.B. Polyamide, Polyester, Polyether, wie Polyethylenoxide, Copolymer-Latices auf wäßriger Basis, wie z.B. Vinylacetatbutylacrylat, oder andere Copolymer-Latices, und/oder Polyvinylalkohole. Besonders bevorzugte weitere Polymere sind Polyamide.

Es ist weiter bevorzugt, daß der Polymerblend Additive enthält, die die Wasseraufnahmefähigkeit erhöhen. Beispiele hierfür sind Sulfonate, Alkohole, Ether und Lactone.

Sofern die Polymerblends in Form von Lack-Formulierungen eingesetzt werden, so wird als intrinsisch leitfähiges Polymer bevorzugt ein mit Butyrolacton nachdispergiertes Polyanilin entsprechend der deutschen Patentanmeldung P 43 17 010.2 verwendet. Dabei ist von besonderem Vorteil, daß diese Vordispersion die Wasseraufnahmefähigkeit des Polymerblends nochmals erhöht.

Ein besonderer Vorteil bei Verwendung von Polymerblends anstelle von reinem intrinsisch leitfähigem Polymer, wie Polyanilin, besteht darin, daß mit Polymerblends auch bei großen Dicken der auf den metallischen Werkstoff aufgebrachten Beschichtung von z.B. mehr als 300 nm, wie 5 bis 300 µm, eine hervorragende Korrosionsschutzwirkung erzielt wird. Dies ist an einer sehr viel stärkeren Verschiebung des Korrosionspotentials und Erniedrigung des Korrosionsstromes im Vergleich zu einer Beschichtung aus reinem leitfähigen Polymer zu erkennen, welche aus der gleichen Menge an leitfähigem Polymer gebildet ist, wie die Polymerblendbeschichtung enthält.

### Verfahrensschritt (b)

Zur weiteren Durchführung des erfindungsgemäßen Verfahrens wird in Verfahrensschritt (b) das mit dem Polymer beschichtete metallische Substrat für einen Zeitraum von mindestens 30 Sekunden und vorzugsweise bis zum Stillstand der Passivierungsreaktion, d.h bis zum Erreichen einer konstanten Zellspannung in einer Korrosionspotentialmeßzelle gemäß DIN 50918, Ziffer 3.3.1.4, mit einem Passivierungsmedium mit Gehalt an sauerstoffhaltigem Wasser in Kontakt gebracht.

Anstelle einer Messung des Potentials der Probe in der Meßzelle gemäß DIN kann auch einfach das Potential des beschichteten Metallteils gegen eine Referenzelektrode gemessen bzw. sein Verlauf während der Passivierungsreaktion verfolgt werden. Hierbei wird selbstverständlich von außen keine Spannung angelegt. Man kann auf eine Potentialmessung verzichten, wenn man den zeitlichen Verlauf der Passivierung kennt, sollte aber gegebenenfalls zur Vermeidung unerwünschter Polarisation, die die Passivierung hemmen könnte, erden oder andere Maßnahmen zur Ableitung treffen.

Es hat sich gezeigt, daß die Beschichtung eines Metalls, wie Eisen, Stahl, Kupfer, Aluminium, oder von anderen metallischen Werkstoffen einschließlich Legierungen, wie z.B. Bronze oder Aluminium-Gußlegierungen, mit dem intrinsisch leitfähigen Polymer alleine in Verfahrensschritt (a) nicht ausreicht als Korrosionsschutz. Diese Beschichtung stellt jedoch überraschenderweise eine Voraussetzung für solch einen Schutz dar, da nur mit ihrer Hilfe das beschichtete Metallsubstrat bei ausreichend langem Kontakt mit dem Passivierungsmedium, wie z.B. sauerstoffhaltigem Wasser, in zufriedenstellender Weise passiviert wird.

Dieses unerwartete Ergebnis stellt somit zugleich eine Erklärung für die mangelhafte Reproduzierbarkeit der herkömmlichen Verfahren dar. Bei diesen hatte man die vermutete Korrosionsschutzwirkung des Polyanilins mit der notwendigen Barriere funktion der Lacke zu kombinieren versucht und Wasser und Salze wegen deren korrosiven Wirkung ferngehalten. Deshalb war in allen diesen Verfahren der Kontakt der Polymerbeschichtung mit sauerstoffhaltigem Wasser bzw. die Gegenwart von sauerstoffhaltigem Wasser an der Grenzfläche zwischen Metall und Polymerbeschichtung durch die Wahl der Versuchsbedingungen behindert oder verhindert oder zumindest nicht kontrolliert worden. Dies war z.B. auch bei K. Thompson et al., (Los Alamos National Laboratories, Projekt-Report LA-UR-92-360, 1991) der Fall. Diese Arbeitsgruppe überzog mit intrinsisch leitfähigem Polymer beschichtete Metalle zuerst noch mit einem wasserundurchlässigen Epoxydecklack, bevor ein Korrosionstest in Wasser durchgeführt wurde. Begrenzte Korrosionsschutzerfolge wurden daher bei diesem und den anderen bekannten Verfahren nur dann erhalten, wenn zufällig eine ausreichende Menge sauerstoffhaltigen Wassers an der Grenzfläche zwischen Metall und leitfähigem Polymer zur Verfügung stand.

Weitere Untersuchungen haben ergeben, daß das erfindungsgemäße Verfahren besonders gute Ergebnisse liefert, wenn als Passivierungsmedium sauerstoffhaltiges Wasser mit einer Leitfähigkeit von mindestens 20 µS eingesetzt wird. Es wird daher auch vorzugsweise salzhaltiges Wasser mit z.B. einem Gehalt von 0,1 Mol NaCl eingesetzt. Schließlich zeigte sich, daß die Passivierung sogar durch Kontakt mit sauerstoffhaltigen verdünnten wäßrigen Säurelösungen als Passivierungsmedium erzielt werden kann.

Es ist überraschend, daß trotz der Gegenwart von korrosiven Substanzen wie Sauerstoff, Wasser, NaCl und sogar Säuren das erfindungsgemäße Verfahren zu sehr gut korrosionsgeschützten Metallwerkstoffen führt. Es war nicht zu erwarten, daß einige dieser Substanzen zwingend erforderlich oder sogar vorteilhaft sind, um den gewünschten Korrosionsschutzeffekt zu erzielen.

Vorzugsweise wird die Passivierungsreaktion so lange durchgeführt, bis sie abgeschlossen ist. Die dafür erforderliche Zeitspanne ist stoffabhängig und beträgt von einigen Minuten bis zu mehreren Stunden, nämlich bis die Zellspannung in einer Korrosionspotential-Meßzelle nach DIN 50918, Ziffer 3.3.1.4, konstant ist (bzw. bis ein Gleichgewichtspotential in einer großtechnischen Meßanordnung erreicht ist). Auf jeden Fall ist zu gewährleisten, daß die Reaktion mindestens 30 Sekunden lang durchgeführt wird.

Der Kontakt zwischen dem beschichteten Metall und dem sauerstoffhaltigen Wasser kann in verschiedener Weise erfolgen. So kann das Werkstück einfach in das Wasser eingetaucht werden und insbesondere größere Metallkonstruktionen, wie z.B. Brücken, können auch einfach mit dem Wasser besprüht werden.

Die Geschwindigkeit der Passivierung kann überraschenderweise durch Gegenwart geeigneter zusätzlicher Oxidationsmittel im wäßrigen Elektrolyten sowie durch erhöhte Temperatur gesteigert werden. So erfolgt die Einstellung des Gleichgewichtspotentials beispielsweise in der Gegenwart von Fe(III)-Ionen innerhalb weniger Minuten, während sie in einem lediglich sauerstoffhaltigen Elektrolyten zumeist mehr als 1/2 Stunde bis mehrere Stunden dauert. Als Oxidationsmittel kommen neben Fe(III)-Ionen auch andere Stoffe in Betracht, wie z. B. Ammoniumperoxodisulfat, Kaliumpermanganat und/oder Wasserstoffperoxid.

Üblicherweise wird der Verfahrensschritt (b) erst nach Abschluß von Schritt (a) und Trocknung der Beschichtung durchgeführt. Es ist jedoch insbesondere bei wasserdispergierbaren leitfähigen Polymeren auch möglich, beide Schritte gleichzeitig durchzuführen. Das heißt, daß gleichzeitig mit der Ausbildung der Polymerbeschichtung bereits die Passivierungsreaktion in dem wäßrigen Medium einsetzt.

Es ist ein wesentlicher Vorteil des erfindungsgemäßen Verfahrens, daß die mit seiner Hilfe hergestellten metallischen Werkstücke besonders gut gegen den in der Praxis sehr häufig vorkommenden korrosiven Angriff durch saure Medien geschützt sind. Dies belegen in verdünnten wäßrigen Säuren aufgenommene Stromdichte-/Potentialkurven von erfindungsgemäßen Werkstücken, welche zu sehr edlen Potentialen verschoben sind und über einen breiten Potentialbereich einen nur sehr geringen Korrosionsstrom zeigen.

Ein weiterer Vorzug des erfindungsgemäßen Verfahrens besteht darin, daß es auch bei bereits korrodierten metallischen Werkstoffen einen Schutz gegenüber weiterer Korrosion bewirkt. In der Praxis werden die korrodierten Werkstoffe zuerst vom anhaftenden losen Rost befreit und danach den erfindungsgemäßen Verfahrensschritten (a) und (b) unterworfen. An diese Behandlung schließt sich bevorzugt die Aufbringung eines Schutzüberzuges gemäß Verfahrensschritt (e) an. Auf diese Weise behandelte Werkstücke zeigen selbst nach mehrmonatiger Außenbewitterung keine Bildung von neuem Rost oder eine Bläschenbildung oder Unterwanderung.

Für besonders anspruchsvolle Korrosionsschutz-Aufgaben, wie z.B. den "schweren Korrosionsschutz" oder die Passivierung gegen saure Kondensate in Abluft-Anlagen von Kraftwerken und Heizungsanlagen, reicht die durch den Verfahrensschritt (b) erzielte spontane Passivierung unter Umständen nicht aus. Durch einen weiteren bei Bedarf ausgeführten Verfahrensschritt (c) kann der Passivierungseffekt jedoch verstärkt werden.

### Verfahrensschritt (c)

Dieser in seiner Wirkung überraschende Verfahrensschritt (c) ist eine kathodische Nachpassivierung, bei der das mit dem Polymer beschichtete und in wäßrigen Medien passivierte Metall auf ein Potential gebracht wird, welches mindestens 50 mV und maximal 500 mV negativer als sein Gleichgewichtspotential gegenüber der Normal-Wasserstoff-Elektrode ist (gemessen in einer Potentialmeßzelle nach DIN 50918, Ziffer 3.3.1.4). Wenn diese Potentiallage länger als 1,5 Minuten eingehalten wird, so wird die Korrosionsgeschwindigkeit nochmals signifikant reduziert und das Korrosionsschutz-Potential zu deutlich positiveren Potentialen hin verschoben. Dabei ist es wichtig, stromlos oder mit nur minimaler Stromdichte von ≤ 2 mA/cm² zu arbeiten.

Dieser Verfahrensschritt ist in seiner Wirkung insofern überraschend, als die gängige Erklärung für die Wirkung von leitfähigen Polymeren als Korrosionsschutz auf Metall-Oberflächen die ist, daß das Eisen gegenüber dem Polyanilin positiv polarisiert wird (Polyanilin ist das edlere Metall). Daß eine Potentialverschiebung des beschichteten Eisens in kathodischer Richtung eine Verstärkung der vermutlich anodischen Passivierung bewirkt, ist deshalb überraschend und heute noch nicht erklärbar.

Beide Verfahrensschritte, die Passivierung in Gegenwart von sauerstoffhaltigem Wasser sowie die kathodische Nachpassivierung, laufen daher offenbar nach komplizierten und heute noch nicht verstandenen Reaktionsmechanismen ab. Diese Schritte führen jedoch zur Bildung einer "Passivierungsschicht", wie Aufnahmen mit dem Rasterelektronenmikroskop von Oberflächen metallischer Substrate zeigen, von denen nach durchgeführter Passivierung gemäß den Schritten (b) und/oder (c) die Polymerbeschichtung vorsichtig entfernt wurde. Bei dieser Passivierungsschicht handelt es sich offenbar um ein bisher unbekanntes Material.

Das ist schon daran erkennbar, daß sich die für einen Stoff spezifische Potential-/Stromdichtekurve eines erfindungsgemäßen Metallwerkstücks mit einer solchen Passivierungsschicht deutlich von der eines Metallwerkstücks unterscheidet, welches nicht mittels des erfindungsgemäßen Verfahrens passiviert wurde. Auch unterscheidet sich die Potential/Stromdichtekurve einer erfindungsgemäß korrosionsgeschützten Stahlprobe deutlich von der einer Stahlprobe mit oberflächlicher Anrostung. Das wiederum bedeutet, daß es sich bei der Passivierungsschicht auch nicht lediglich um eine Schicht aus herkömmlichen oxidischen Eisenverbindungen handelt, die bei der Rostbildung entstehen. Analog läßt sich dies z.B. auch bei Kupfer und Aluminium belegen, bei denen nach erfindungsgemäßer Passivierung ebenfalls eine andere, zu positiveren Potentialen verschobene Potential-/Stromdichtekurve gefunden wird als bei den entsprechenden spontan oxidisch überzogenen Werkstücken.

Möglicherweise handelt es sich bei der erhaltenen Passivierungsschicht um eine unbekannte Modifikation eines Oxides des betreffenden Metalls oder einen oxidischen Komplex von dem intrinsisch leitfähigen Polymer mit dem Metallsubstrat. So wurden im Falle von Stahlproben, die erfindungsgemäß mit Polyanilin beschichtet, passiviert und anschließend von der Polyanilin-Beschichtung vorsichtig befreit wurden, mittels AUGER-Spektroskopie neben Sauerstoff und dem betreffenden Metall auch Kohlenstoff und in untergeordneter Menge Stickstoff als Bestandteile der erhaltenen Passivierungsschicht nachgewiesen.

Es ist somit offen, ob das erfindungsgemäße Verfahren tatsächlich zu einer Passivierung im klassischen Sinne führt, die sich gerade durch die Bildung von Metalloxid-Deckschichten auf dem zu schützenden Metallsubstrat auszeichnet. Aus diesem Grund ist der in der Beschreibung und den Ansprüchen verwendete Begriff Passivierung auch allgemein als Behandlung aufzufassen, die zum Schutz des Metallsubstrats gegenüber Korrosion, insbesondere durch Verschiebung des Korrosionspotentials zu positiveren Werten, führt.

### Verfahrensschritt (d)

In einem weiteren Verfahrensschritt (d) kann zur Verbesserung der Haftung einer gegebenenfalls erwünschten Korrosionsschutzüberzuges die Polymer-Beschichtung entfernt werden. Dies sollte so geschehen, daß die gebildete Passivierungsschicht nicht verletzt wird. Besonders einfach läßt sich die Polymer-Beschichtung entfernen, wenn sie eine hohe Schichtdicke aufweist und zudem noch eine kathodische Nachpassivierung gemäß Verfahrensschritt (c) durchgeführt wurde. In diesem Fall reichen weiche Bürsten und ggf. die Verwendung von Lösungsmitteln wie Methanol aus, die Polymer-Beschichtung vollständig zu entfernen. Dabei erkennt man die aufgrund der durchgeführten Passivierung gegenüber dem unbehandelten metallisch glänzenden Substrat veränderte Farbe. Die Metalloberfläche ist nunmehr im Falle des Stahls matt und grünlich-grau und beim Aluminium matt und gräulich, wobei sich in beiden Fällen zumeist Flecken mit dunkler Färbung von Bereichen mit hellerer, grauer Mattierung abheben.

Es ist jedoch auch möglich, die Polymer-Beschichtung auf dem metallischen Werkstoff zu belassen. Der Vorteil dieser Verfahrensweise liegt darin, daß auf diese Weise eine permanente Nachpassivierung des Werkstoffs auch nach Verletzungen oder Beschädigungen ermöglicht wird.

### Verfahrensschritt (e)

Je nach Bedarf kann in Verfahrensschritt (e) das passivierte metallische Werkstück nach gegebenenfalls durchgeführter Trocknung auch noch mit einem Korrosionsschutz-Überzug beschichtet werden, welcher üblicherweise auch als Barriereschicht oder Decklack bezeichnet wird. Dessen Art bestimmt sich nach praktischen Erfordernissen und dem späteren Einsatzzweck des metallischen Werkstückes. Hierbei ist lediglich zu beachten, daß im Falle der Entfernung der Polymer-Beschichtung gemäß Verfahrensschritt (d) der Schutzanstrich schnell aufgebracht werden sollte, um eine nachteilige Veränderung der Passivierungsschicht, ersichtlich an einer farblichen Veränderung, z.B. bei Stahl von einem geringfügigen Grünstich der grauen Mattierung zu einem bräunlichen Ton, zu verhindern. Hierzu hat man jedoch mehrere Minuten Zeit, so daß der weiteren konventionellen Schutz lackierung keine praktischen Hindernisse entgegenstehen.

Als Schutzüberzugsmaterialien finden vor allem konventionelle Epoxylacke, (z.B. Eposyst 2000 der Firma Wilckens), Alkydharzlacke oder PVC-Lacke Anwendung. Ein besonders bevorzugter Schutzüberzug wird dadurch erhalten, daß zuerst ein Polymerblend mit Gehalt an Polyanilin und auf der Basis von Polyamid und anschließend ein Epoxy-Decklack auf das metallische Werkstück aufgebracht wird. Ein solcher Schutzüberzug hat sich z.B. als sehr vorteilhaft erwiesen, wenn bereits korrodierte Werkstoffe vor weiterer Korrosion geschützt werden sollen.

Schließlich kann eine verbesserte Haftung eines Schutzlacks und überraschenderweise auch eine weitere Verschiebung der Stromdichte-/Potentialkurve zu noch positiveren Potentialen erzielt werden, wenn vor der Beschichtung in Verfahrensschritt (a) das metallische Werkstück phosphatiert wird. Phosphatierungen werden gewöhnlich nur vorgenommen, um eine verbesserte Haftung organischer Lacke auf den zu beschichteten Metallen zu bewirken. Im allgemeinen wird der Phosphatierung jedoch kein eigenständiger Korrosionsschutzeffekt zugeschrieben. Überraschenderweise hat die Durchführung der Passivierung bei einer phosphatierten Stahlprobe jedoch nicht nur erwartungsgemäß eine verbesserte Haftung der Polyanilin-Beschichtung und des herkömmlichen Schutzlacks erbracht, sondern auch eine nochmalige deutliche Verschiebung des Korrosionspotentials zu positiveren Potentialen. Ob dies elektrochemische Ursachen hat oder lediglich darauf zurückzuführen ist, daß die Metallprobe beim Phosphatieren poröser wird und somit eine höhere Oberfläche für die Passivierungsreaktion zur Verfügung steht, konnte noch nicht geklärt werden.

Die Erfindung wird nachstehend anhand von Beispielen erläutert.

### Beispiele

### Beispiel 1 - Aufbau der Meßzelle und Probenvorbereitung

Die Aufnahme von Korrosionspotential-Korrosionsstrom-Kurven erfolgte bei allen Beispielen entsprechend DIN 50918, Ziffer 3.3.1.4. Die metallischen Werkstücke wurden entsprechend den Vorschriften der DIN am Platz der Meßelektrode M positioniert. Die Aufnahme der Potential/Stromkurven erfolgte, sofern nicht anders angegeben, bei allen Beispielen in 1 molarer wäßriger NaCl-Lösung, um die einzelnen Ergebnisse miteinander vergleichen zu können.

Alle Werkstücke wurden vor der Messung sowie vor den nachfolgenden Behandlungen wie folgt vorbehandelt:
- Entgraten und Begradigen der Plättchenkanten mit einer Feile
- Trockenschleifen mit Schmirgelleinen mit 50er und 100er Körnung
- Nachschleifen mit Schmirgelleinen 100er und 200er Körnung
- dreimaliges Entfetten mit Ethylacetat (1. und 2. Mal mit Pinsel, beim 3. Mal mit Ultraschall).

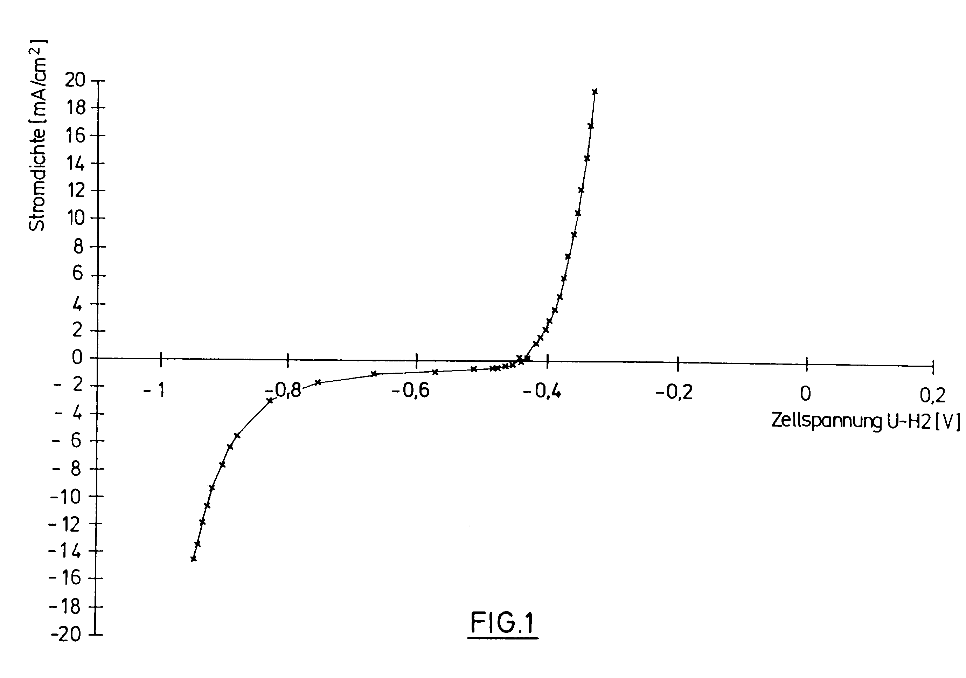

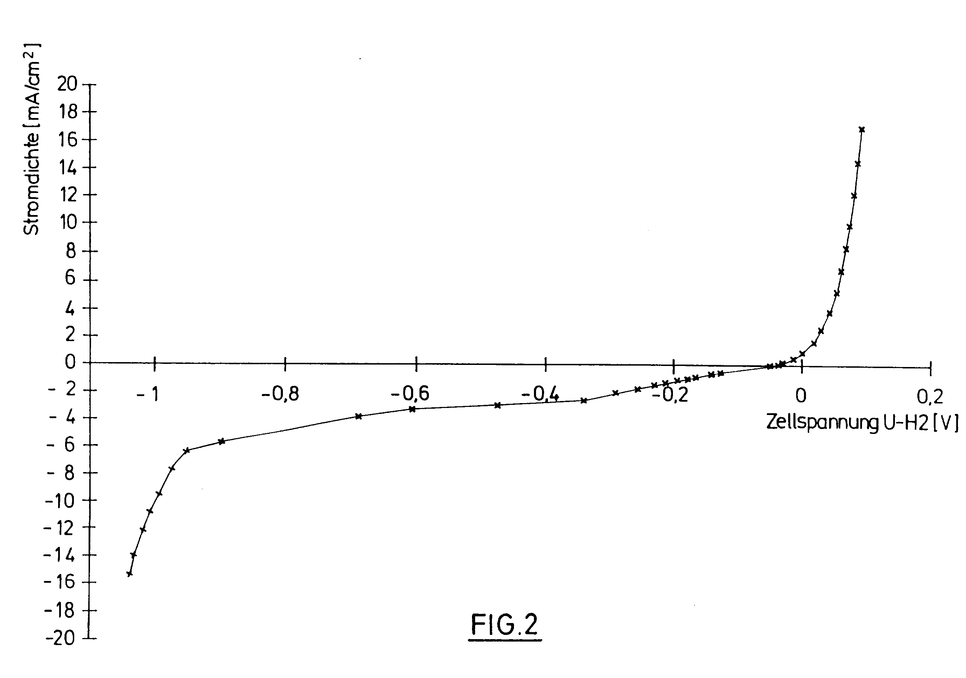

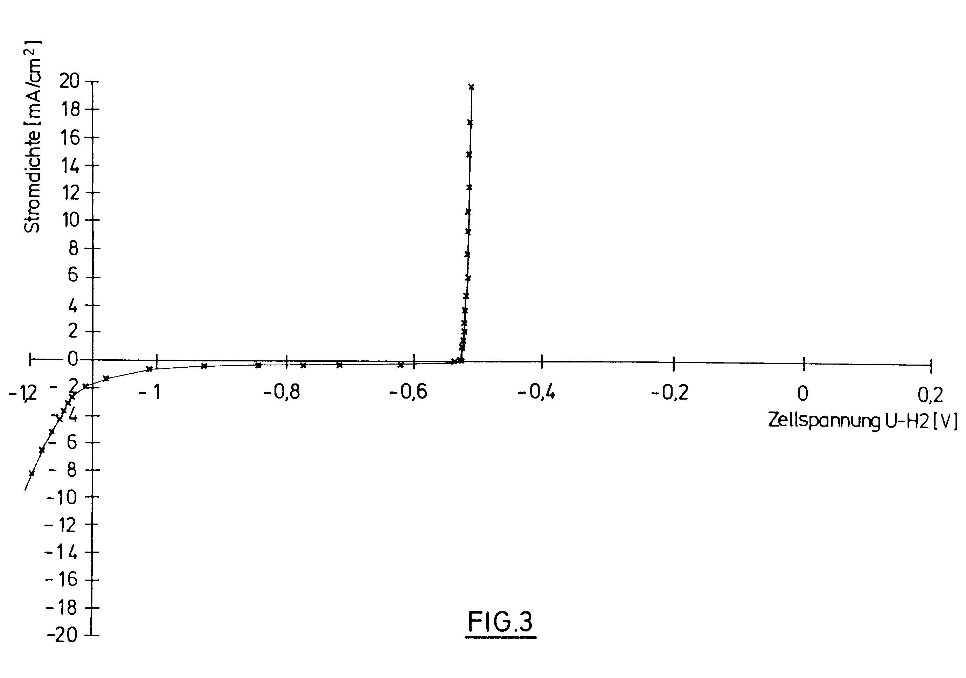

Unbeschichtete Proben von (a) Stahl ST 37, (b) Kupfer und (c) Aluminium wurden als Vergleich kathodisch und anodisch durchfahren. Dadurch ergaben sich die in den Figuren 1, 2 bzw. 3 wiedergegebenen Potential-/Stromkurven.

Die selbständige Passivierung des Aluminiums war daran erkennbar, daß sich das ursprüngliche Potential innerhalb weniger Sekunden zu positiveren Potentialen hin verschob und erst danach eine anodische Meßstrecke durchfahren werden konnte.

### Beispiel 2 - Beschichtung mit reinem Polyanilin

Gemäß Beispiel 1 vorbehandelte metallische Werkstücke wurden durch Eintauchen in eine Dispersion von Polyanilin in organischen Lösungsmitteln beschichtet. Die Dispersion wurde gemäß den Lehren der DE-PS 38 34 526.9 und der EP-OS 168 620 hergestellt, wobei als Lösungsmittel DMSO diente und Polyanilin eingesetzt wurde, welches mit Dodecylbenzolsulfonsäure (DBSH) dotiert worden war. Bei der Beschichtung bewährte sich eine Vorwärmung der Proben auf 100°C, bevor diese mit der Polyanilin-Dispersion in Kontakt gebracht und anschließend getrocknet wurden. Dieser Beschichtungszyklus wurde mindestens zweimal durchgeführt.

Wenn nicht anders erwähnt, wurden in den folgenden Beispielen Werkstücke verwendet, die insgesamt 10 Beschichtungszyklen durchlaufen hatten. Weiter wurde, sofern nicht anders angegeben, in allen Beispielen mit Dodecylbenzolsulfonsäure (DBSH) dotiertes Polyanilin eingesetzt.

### Beispiel 3 - Passivierung von Stahlproben

Mehrere Stahlproben (Stahlsorte ST 37) wurden entsprechend Beispiel 2 beschichtet, wobei 2, 3, 5, 10 und 20 Beschichtungszyklen durchgeführt wurden. Anschließend wurden die Proben in 1 molare wäßrige NaCl-Lösung (80 mS/cm) eingetaucht. Dabei stellte sich ein Potential von 300 mV ein. Im Verlaufe von etwa 30 bis 60 Minuten stellte sich zunächst schnell, dann immer langsamer ein Gleichgewichtspotential von 620 mV ein. Sicherheitshalber wurde in diesem und in den nachfolgenden Versuchen die Einstellung des Gleichgewichtspotentials über einen Zeitraum von 16 Stunden abgewartet, um exakt reproduzierbare Versuchsbedingungen zu gewährleisten.

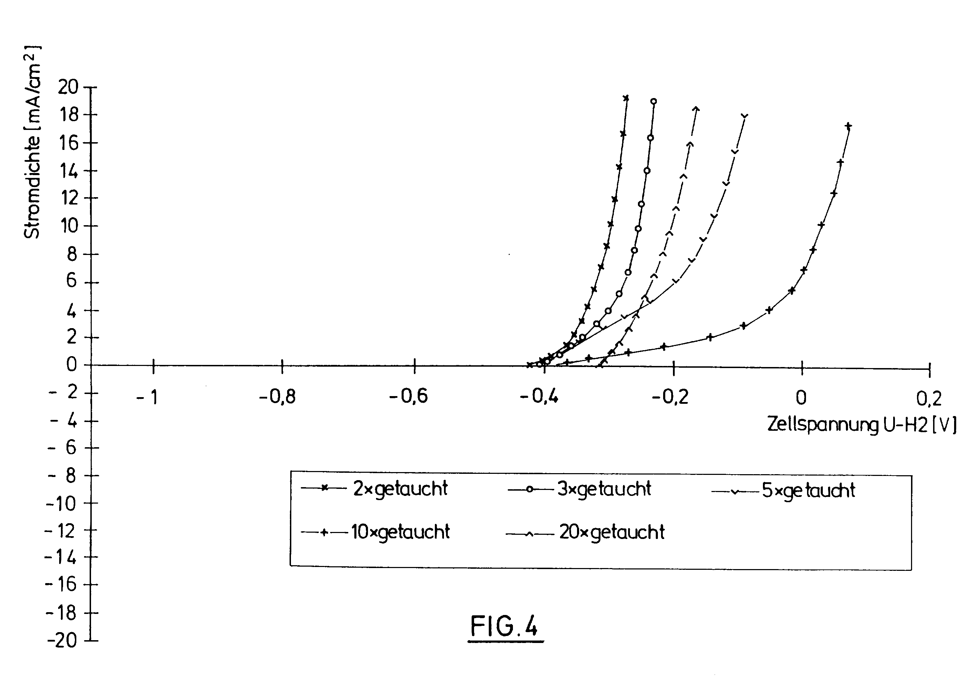

Bei Aufnahme der Strom-/Potentialkurve der Stahlproben unmittelbar nach Durchführung der Beschichtung konnte praktisch keine Verschiebung oder Veränderung gegenüber der Kurve für eine unbeschichtete Stahlprobe (Figur 1) beobachtet werden. Das gleiche Verhalten wurde auch bei Kupfer- und Aluminiumproben festgestellt. Wenn die Messung jedoch nach Einstellung des Gleichgewichtspotentials durchgeführt wurde, so erhielt man zu edleren Potentialen hin verschobene Kurven, aus denen ersichtlich war, daß bei vergleichbaren Potentialen ein um mindestens 50% verringerter Korrosionsstrom floß (siehe Figur 4).

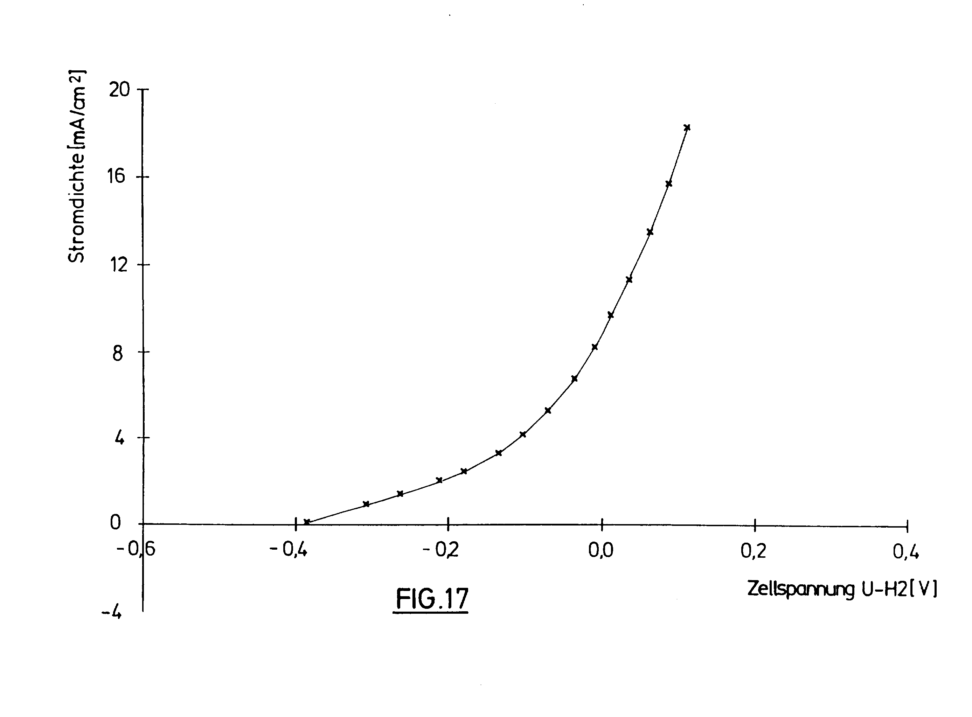

Dieses Ergebnis wurde auch dann erzielt, wenn die Einstellung des Gleichgewichtspotentials in sauerstoffhaltigem destillierten Wasser oder sauerstoffhaltigem Leitungswasser durchgeführt wurde. Für eine derart passivierte Stahlprobe, die vorher gemäß Beispiel 2 beschichtet worden war, wurde in 1 molarer wäßriger NaCl-Lösung die in Figur 17 wiedergegebene Strom/Potentialkurve erhalten, die sich nur geringfügig von der in Figur 4 dargestellten Kurve unterschied.

### Beispiel 4 - Kathodische Nachpassivierung

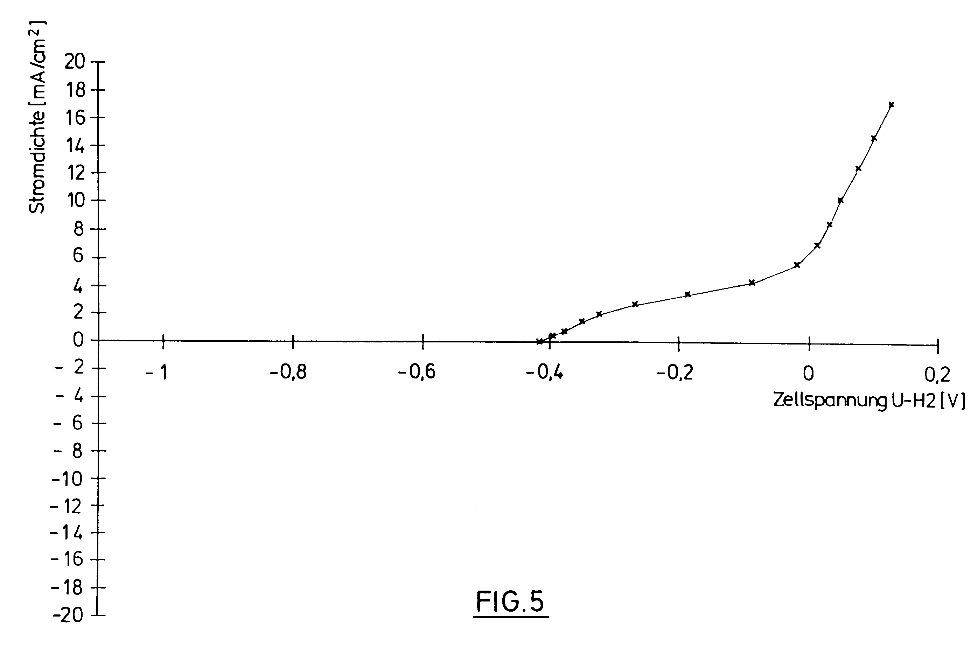

Eine entsprechend Beispiel 2 beschichtete Stahlprobe wurde nach der Passivierung gemäß Beispiel 3 bei einem Potential von -0,55 V kathodisch polarisiert. Es floß ein Strom von weniger als 1 mA/cm². Die erhaltene, zu positiveren Potentialen verschobene Potential-/Stromkurve zeigt Figur 5.

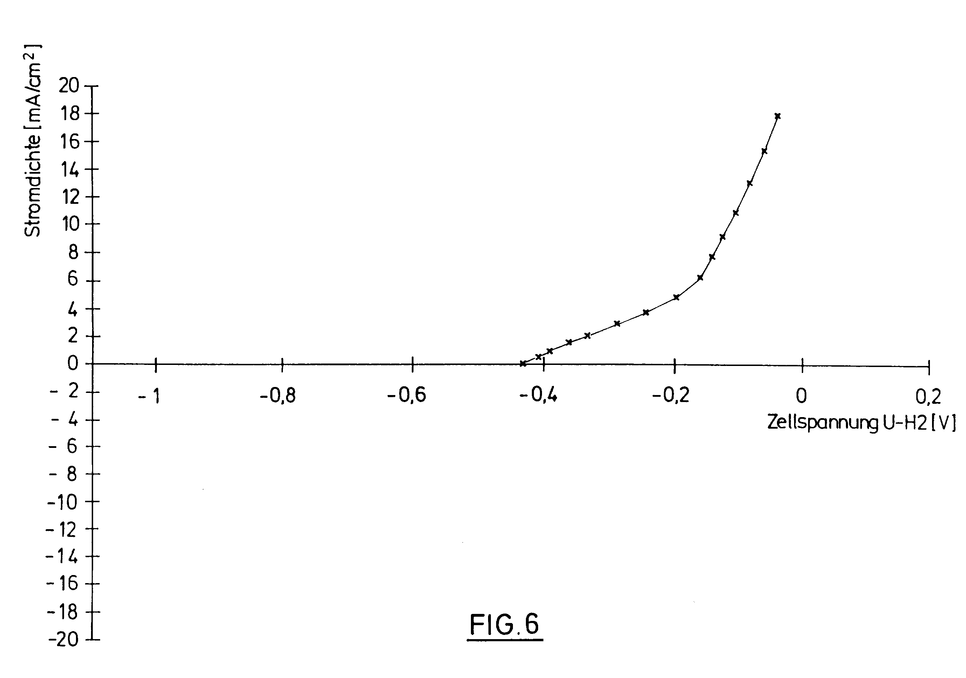

Bei einem Vergleichsversuch wurde die kathodische Nachpassivierung bei noch niedrigerem Potential durchgeführt, so daß ein Strom von mehr als 2 mA/cm² fließen konnte. Das führte dazu, daß die Strom-/Potential-Kurve wieder zu negativeren Potentialen zurück verschoben wurde, was mit einem erleichterten Korrosionsangriff gleichbedeutend ist (Figur 6).

### Beispiel 5

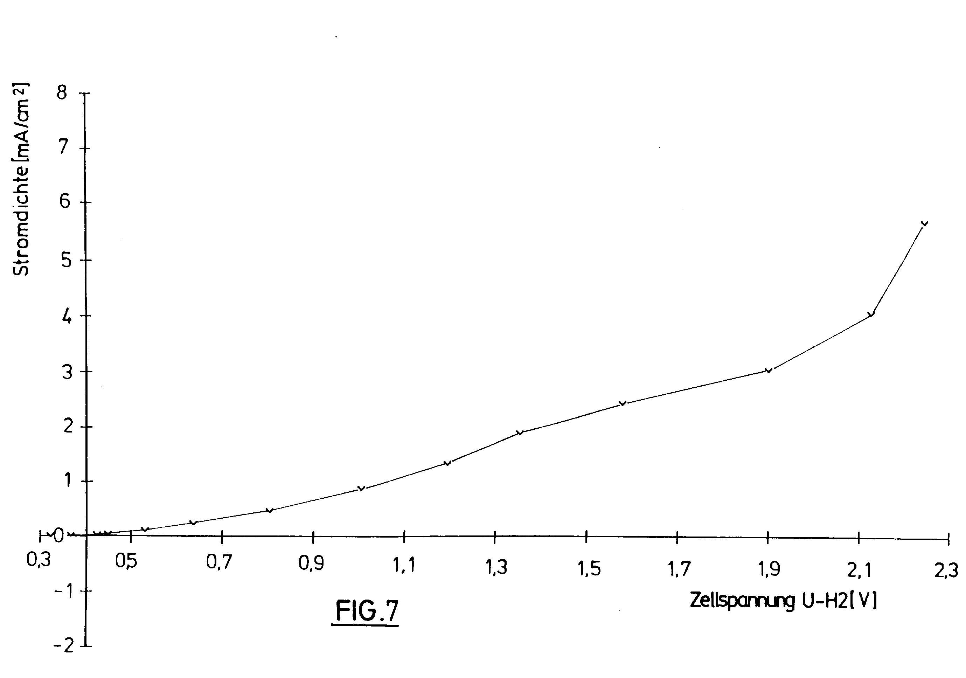

Gemäß den Beispielen 2 und 3 beschichtete und passivierte Kupferproben ergaben die in Figur 7 dargestellte Strom/Potential-Kurve.

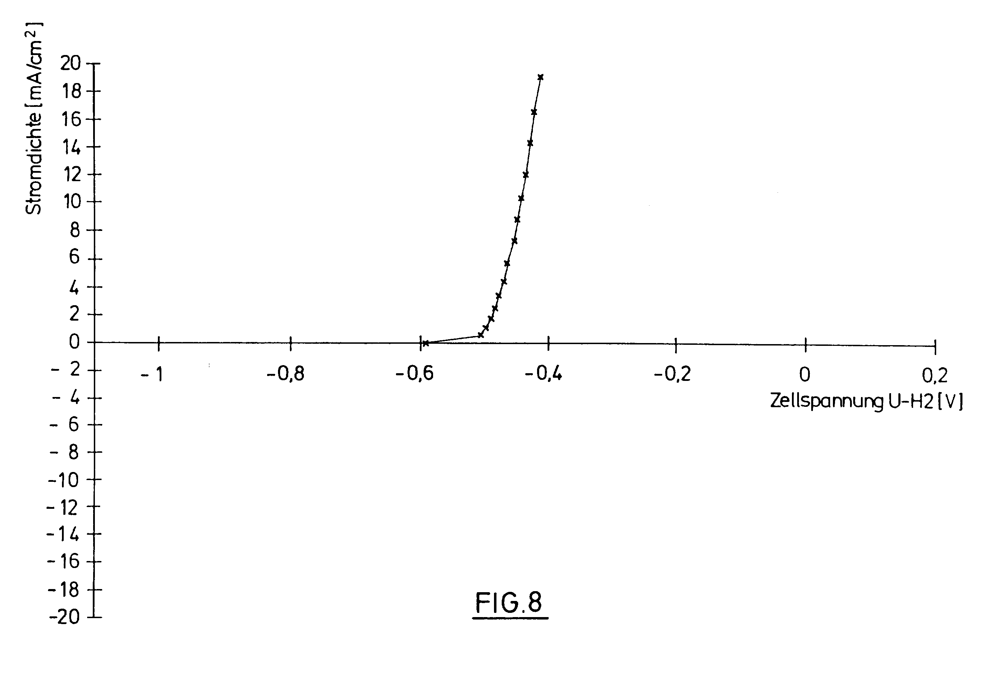

Gemäß den Beispielen 2 und 3 beschichtete und passivierte Aluminiumproben ergaben die in Figur 8 dargestellte Strom/Potential-Kurve.

Beide Kurven belegen die durch das erfindungsgemäße Verfahren hervorgerufene starke Reduzierung des Korrosionsstromes auch bei Kupfer und Aluminium.

### Beispiel 6

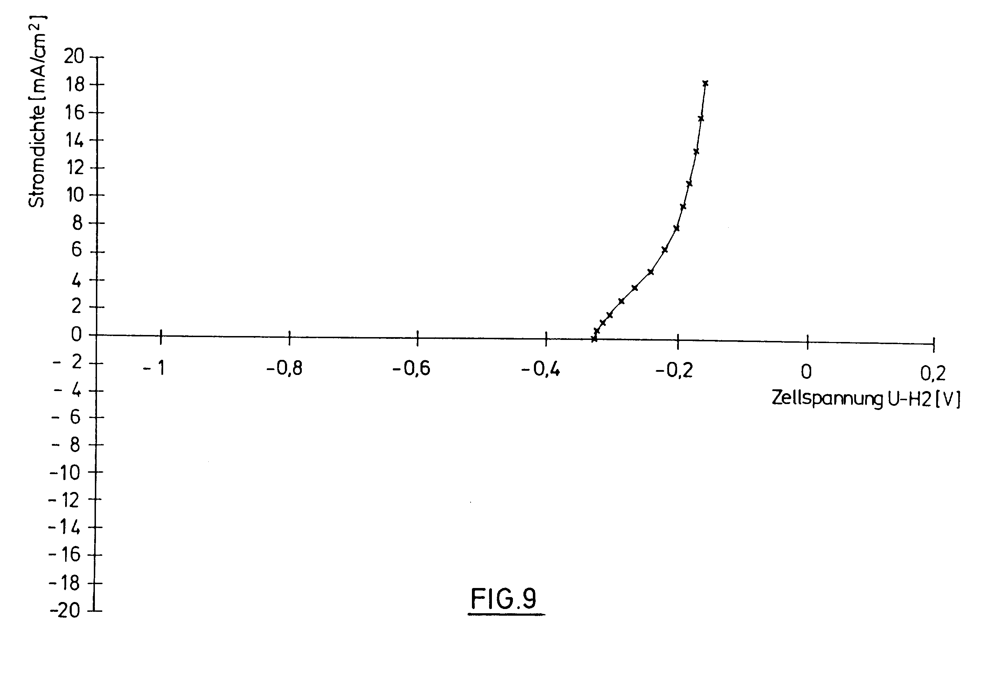

Nach Beispiel 2 beschichtete (20 Beschichtungszyklen) und anschließend nach Beispiel 3 passivierte Stahlproben wurden vorsichtig vom Polyanilin befreit. Hierzu diente eine weiche Bürste. Im Unterschied zu den nicht in Wasser eingetauchten Stellen des metallischen Werkstückes waren die mit Wasser in Kontakt gekommenen Bereiche der Probe nicht mehr metallisch glänzend, sondern gräulich matt mit einem leicht grünlichen Schimmer. Es zeigten sich dunklere Flecken auf einer insgesamt hellgrauen matten Oberfläche. Die Strom-/Potentialkurve für die so behandelten Stahlproben ergibt sich aus Figur 9. Sie unterscheidet sich deutlich von der eines zum Vergleich unbehandelten Stahlwerkstücks (vgl. Fig. 1).

Ein weiterer Versuch zeigte, daß sich das Polyanilin besonders leicht entfernen ließ, wenn eine Stahlprobe nach Durchlaufen von einer größeren Anzahl von Beschichtungszyklen, z.B. 20 Zyklen, passiviert und zudem kathodisch nachpassiviert wurde. Die graue Färbung war dann deutlicher, das Werkstück war matter und es waren zahlreichere und größere dunkle Flecken auf hellerem Hintergrund festzustellen.

Die Untersuchung der Stahlproben mittels Rasterelektronenmikroskop (CamScan CS 24-Gerät der Firma Cambridge-Scanning Com. Ltd., Cambridge, England) mit angekoppelter energiedispersiver Röntgenspektroskopie-Analyseeinrichtung der Firma EDAX-International, Mahwah, USA, ergab, daß sich auf ihrer Oberfläche eine Materialschicht mit hohem Sauerstoffgehalt abgeschieden hatte. Zur weiteren Aufklärung der Zusammensetzung dieser Schicht wurde die Oberfläche der Proben mittels AUGER-Spektroskopie näher untersucht. Im Ergebnis konnten mit der AUGER-Analyse die folgenden Elemente nachgewiesen werden.

| Element | Position (eV) | Atomkonzentration (%) |
|---|---|---|
| Fe 700 | 697,50 | 11,65 |
| Fe 645 | 643,50 | 13,70 |
| Fe 589 | 584,00 | 25,98 |
| O 503 | 507,00 | 18,03 |
| Cl | 179,50 | 0,45 |
| C | 263,00 | 29,65 |
| N | 375,00 | 0,53 |

Auffällig ist der hohe Gehalt an Sauerstoff (O) und Kohlenstoff (C) sowie der Gehalt an Stickstoff (N). Es ist somit durchaus möglich, daß es sich bei der Passivierungsschicht um einen oxidischen Komplex des Metalls mit einem Derivat des eingesetzten Polyanilins oder einem Reaktionsprodukt einer Metalloxid-Modifikation mit einem Polyanilin-Derivat handelt.

### Beispiel 7

Gemäß den Beispielen 3 und 4 behandelte Stahl-Werkstücke (ST 37) sowie solche, die für Vergleichszwecke unbehandelt blieben, wurden mit einem konventionellen PVC-Korrosionsschutz-Lack (Vinylclorid-Vinylacetat-Copolymer-Lack der Firma Hagebau mit der Bezeichnung "Hagebau-Flüssigkunststoff") beschichtet und in einem Salz-Sprüh-Test gemäß DIN 50021 getestet. Die unbehandelten Werkstücke waren bereits nach wenigen Tagen deutlich korrodiert, während bei den behandelten Werkstücken selbst nach 10 Tagen Lagerdauer keine Korrosion zu beobachten war.

### Beispiel 8 - Beschichtung mit neutralem Polyanilin

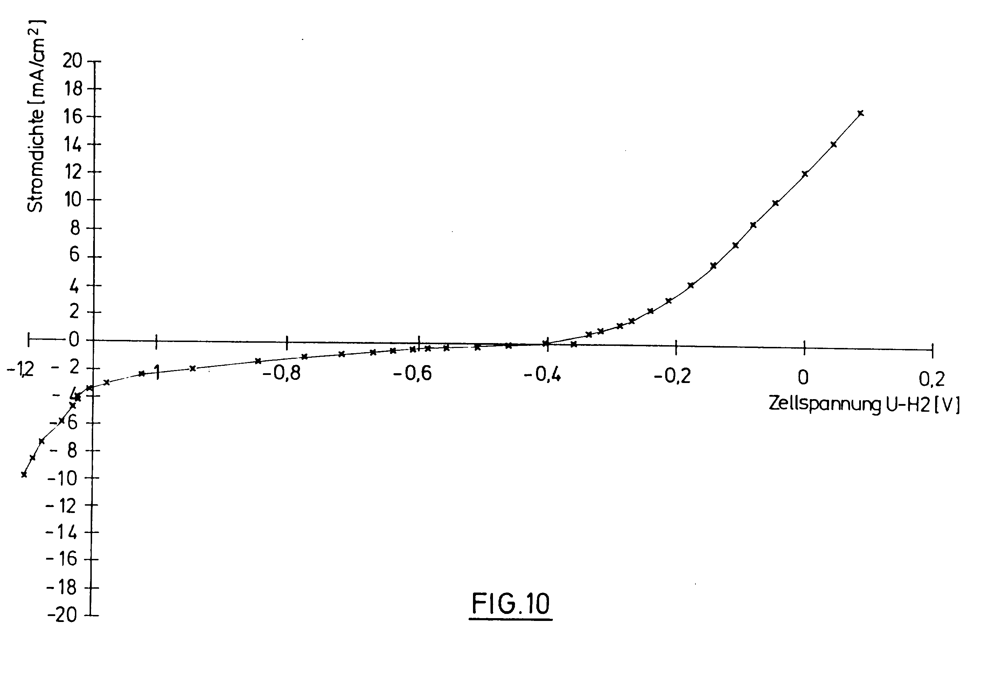

Stahl-Werkstücke (ST 37) wurden gemäß Beispiel 2 beschichtet und gemäß Beispiel 3 passiviert, wobei jedoch eine Beschichtung mit neutralem, d.h. nicht dotiertem, Polyanilin aus Lösung bzw. Dispersion aufgebracht wurde. Die in Figur 10 dargestellte, entsprechende Strom/Potentialkurve ist ebenfalls zu positiveren Potentialen hin verschoben und belegt, daß auch mit neutralem Polymer eine korrosionsschützende Wirkung erzielt werden kann.

### Beispiel 9 - Phosphatierte Stahlprobe

Ein Stahl-Werkstück (ST 37) wurde gemäß Beispiel 1 vorbehandelt und gereinigt und nach der beschriebenen Reinigung mit Phosphorsäure H₃PO₄ gebeizt. Nach dem Spülen wurde entsprechend DIN 50942 Zinkphosphat aus einer Zinkdihydrogenphosphat-Lösung (Zn(H₂PO₄)₂) in einer Schichtdicke von ca. 20 µm galvanisch auf dem Werkstück abgeschieden. Die anschließend gespülte und getrocknete Probe wurde danach gemäß Beispiel 10 mit dem dort beschriebenen Lack beschichtet und gemäß Beispiel 3 passiviert.

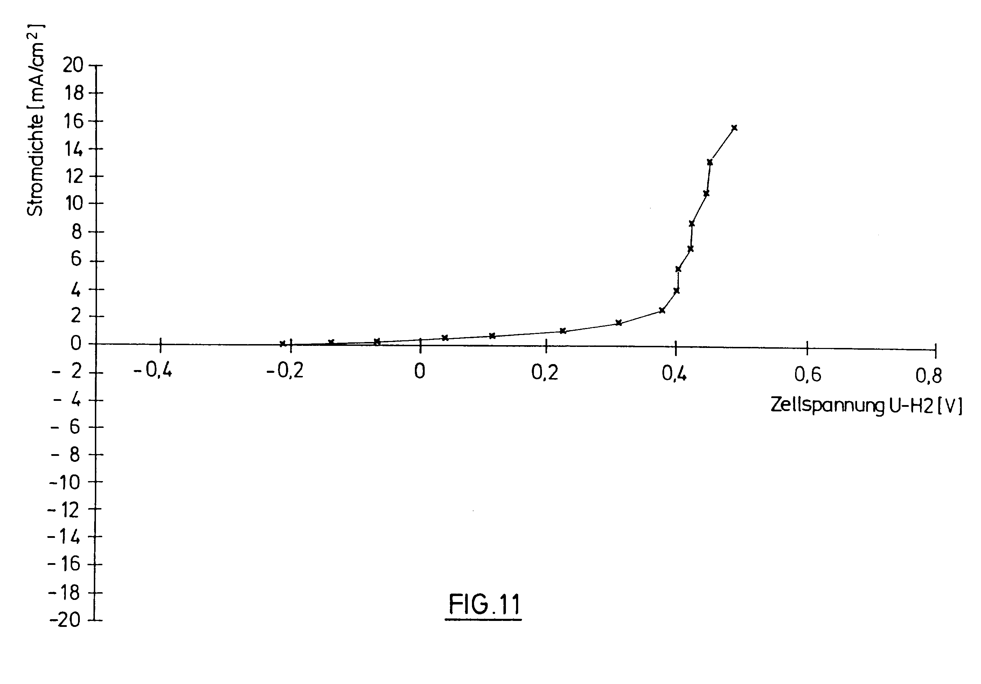

Die Stromdichte-Potentialmessung ergab die in Figur 11 dargestellte Kurve.

### Beispiel 10 - Beschichtung mit Polymerblend

### Herstellung der Polymerblend-Beschichtung (Lack)

Ein Lack mit Polyanilin und auf der Basis von Polyamid wurde hergestellt. Einsetzbare Lacke sowie Prinzipien zu deren Herstellung sind auch in EP-OS 168 620, WO 89/02155 und WO 93/14166 beschrieben.

Zur Herstellung des in diesem Beispiel verwendeten Lacks wurden zunächst 80 Gew.-% Polyanilin und 20 Gew.-% Butyrolacton in einem Kneter zu einer Vordispersion gemischt. Zu 40 Gew.-% dieser Vordispersion wurden 60 Gew.-% Co-Polyamid (Eurolon 975 der Firma Witco) gegeben, und die entstandene Mischung wurde in einem Kneter bei ungefähr 150°C zu einem homogenen Material verarbeitet. 10 Gew.-% diese Materials wurden dann mit 10 Gew.-% Eurolon 975 und 80 Gew.-% Isopropanol mittels einer Kugelmühle 24 Stunden lang dispergiert. Der entstandene Lack wurde nochmals 1 : 1 (Gew.-Teile) mit Isopropanol verdünnt und dann mit einem Rakel in einer Schichtstärke von 50 µm (in feuchtem Zustand) auf Stahlproben (Stahlsorte ST 37) aufgetragen. Der Lack wurde luftgetrocknet und hatte danach eine Schichtdicke von ca. 15 µm. Der Lack besaß einen Polyanilinanteil von 20 Gew.-%, bezogen auf das Trockengewicht der Lackmasse, und eine Wasseraufnahmefähigkeit von 20 Gew.-%.

### Einstellung des Gleichgewichtspotentials

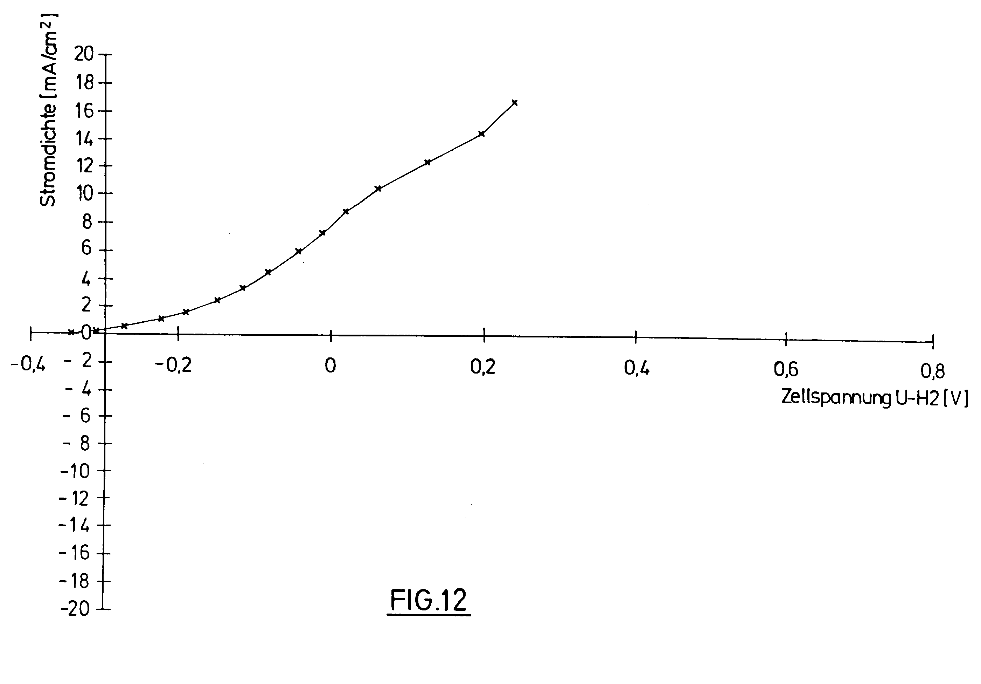

Das auf diese Weise beschichtete Werkstück wurde anschließend wie in Beispiel 3 beschrieben passiviert. Die nach Einstellung des Gleichgewichtspotentials erhaltenen Werte für das Potential sowie den Korrosionsstrom sind in Figur 12 graphisch dargestellt.

### Beispiel 11 - Beschichtung mit Polymerblend

Entsprechend Beispiel 10 wurde ein 6 Gew.-% Polyanilin enthaltender Primer auf der Basis eines kommerziell erhältlichen wäßrigen Latex (Senosol-Einschichtlack der Firma Weilburger Lackfabrik, Deutschland) in wäßriger Suspension/Dispersion unter Verwendung einer Kugelmühle hergestellt. Der erhaltene Primer wurde auf Stahlproben (Stahlsorte ST 37) aufgetragen und vollständig getrocknet. Der getrocknete Lack zeigte eine Wasseraufnahmefähigkeit von 10 Gew.-%.

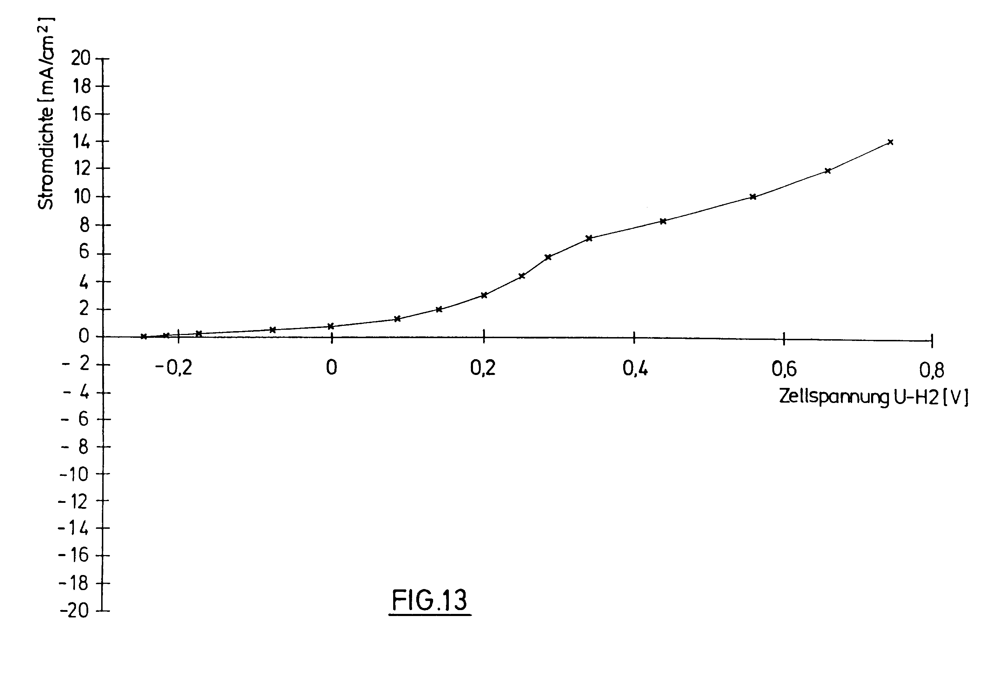

Anschließend wurde das Gleichgewichtspotential der Passivierung wie in Beispiel 3 eingestellt. Nach der Passivierung wurde in derselben Meßzelle das Potential sowie der Korrosionsstrom gemessen. Die Ergebnisse dieser Messung sind in Figur 13 graphisch dargestellt.

### Beispiel 12 - Spalt- und Lochkorrosion von Stahl

In diesem Beispiel wurde die Spalt- und Lochkorrosion von Stahlproben (ST 37) in FeCl₃-Lösung gemäß ASTM G-48 getestet. Diesem Test wurden die folgenden Proben unterzogen:
- Probe (1) (Erfindungsgemäß):
   Hierbei handelte es sich um eine Stahlprobe, die gemäß Beispiel 10 mit dem dort beschriebenen Lack beschichtet und gemäß Beispiel 3 passiviert worden war sowie zusätzlich einen Epoxy-Decklack (Eposyst 2000 der Firma Wilckens) als konventionellen Korrosionsschutz-Lack aufwies.
- Probe (2) (Vergleich):
   Diese Stahlprobe war lediglich durch Beschichtung mit dem beschriebenen Epoxy-Decklack vorbehandelt worden.
- Probe (3) (Vergleich):
   Diese Stahlprobe unterschied sich von Probe (2) lediglich dadurch, daß sie zusätzlich eine Zinkstaubgrundierung (Epoxid-Zinkstaub-Farbe EPB 7601 der Firma Wilckens) aufwies. Die Kombination aus dieser Grundierung und dem verwendeten Epoxy-Decklack ist als sehr leistungsfähiges Antikorrosionsmittel bekannt.

Der nach Verletzung des Decklacks bei allen Proben durchgeführte Spalt-Korrosionstest wurde lediglich von der erfindungsgemäßen Probe (1) bestanden. Diese Probe zeigte an den Verletzungsstellen praktisch keine Rostspuren, geschweige denn eine Unterwanderung.

### Beispiel 13 - Kontaktkorrosion mit Kupfer

In diesem Beispiel wurden die Proben (1) bis (3) der in Beispiel 12 angegebenen Art einem Kontaktkorrosions-Test mit Kupfer nach DIN 50919 unterzogen. Hierzu wurden zwei unterschiedliche Anordnungen überprüft.

Bei der ersten Anordnung mit isolierender Verschraubung gegen Kupfer und Anbringung einer kreuzförmigen Verletzung nur durch die Epoxy-Schicht zeigte die mit Polyanilin passivierte Probe (1) praktisch keine Rostbildung in der Verletzung. Die Vergleichsproben (2) und (3) hingegen wiesen starken Rostansatz auf.

In der zweiten Anordnung wurde die Kontaktkorrosion mit Kurzschluß und kreuzförmiger Verletzung bis auf die Metalloberfläche überprüft. Hierbei wurde der Stromfluß gemessen. Die erfindungsgemäße Stahlprobe (1) zeigte einen Stromfluß von ca. 1 mA. Bei den Vergleichsproben (2) und (3) hingegen wurde ein deutlich größerer Strom von 2,5 bis 3 mA und damit eine größere Korrosionsgeschwindigkeit gemessen.

### Beispiel 14 - Korrosionstest mit Außenbewitterung

Stahlproben (1) bis (3) der in Beispiel 12 genannten Art wurden nach Anbringung von horizontalen Schnittverletzungen im Epoxy-Decklack 90 Tage lang bei feuchtem und kaltem Frühjahrswetter im Freien aufbewahrt. Nach Ende der Tests zeigte die erfindungsgemäße Probe (1) keine bzw. nur eine sehr geringe Rostbildung in der Schnittverletzung der Korrosionsschutzlackierung. Sowohl die mit der Epoxy-Beschichtung versehene Probe (2) als auch die zusätzlich mit ZinkstaubGrundierung versehene Probe (3) hingegen zeigten starke Rostbildung.

### Beispiel 15 - Korrosionstest mit Außenbewitterung

In einem weiteren Korrosionstest mit Außenbewitterung wurden Stahlblech-Proben (Stahlsorte Bonder der Firma. Chemetal, Frankfurt) eingesetzt, welche jeweils zur Hälfte gemäß Beispiel 10 mit dem dort beschriebenen Lack beschichtet und gemäß Beispiel 3 passiviert sowie abschließend mit einer Decklackierung (Vinylclorid-Vinylacetat-Copolymer-Lack der Firma Hagebau mit der Bezeichnung "Hagebau-Flüssigkunststoff") versehen worden waren. Da die Decklackierung transparent war, konnten Veränderungen an der Metalloberfläche und im Lack gut beobachtet werden. In die Decklackierung wurden in horizontaler Richtung Schnitte angebracht, die von der nicht-passivierten Hälfte bis in die passivierte Hälfte reichten.

Der Test wurde mit drei verschiedenen Proben durchgeführt, wobei Probe (A) nicht zusätzlich behandelt, hingegen Probe (B) vor der Aufbringung der Polyanilin-Schicht phosphatiert und bei Probe (C) nach der Passivierung die Polyanilin-Primerschicht vorsichtig entfernt worden war.

Die Aufbewahrung dieser Proben während 90 Tagen bei kaltem und feuchtem Frühjahrswetter führte dazu, daß bei allen Proben die schnittförmigen Decklackverletzungen im nicht-passivierten Bereich einige Millimeter stark durch Korrosion unterwandert worden waren, während in den passivierten Hälften eine solche Unterwanderung praktisch nicht feststellbar war. An der passivierten Hälfte zeigte Probe (B) überhaupt keinen und Probe (A) nur sehr wenig Rost. Probe (C) war in der Schnittverletzung in der passivierten Hälfte zwar verrostet, aber nicht unterwandert.

Dieser Test zeigte somit, daß der Polyanilin-Primer auf der Oberfläche des zu schützenden Metallsubstrats verbleiben sollte (Proben (A) und (B)), da damit eine Unterwanderung und Rostbildung im Verletzungsbereich bei den Testbedingungen ausgeschlossen werden konnte.

### Beispiel 16 - Korrosionsschutz bei bereits verrosteten Stahlproben

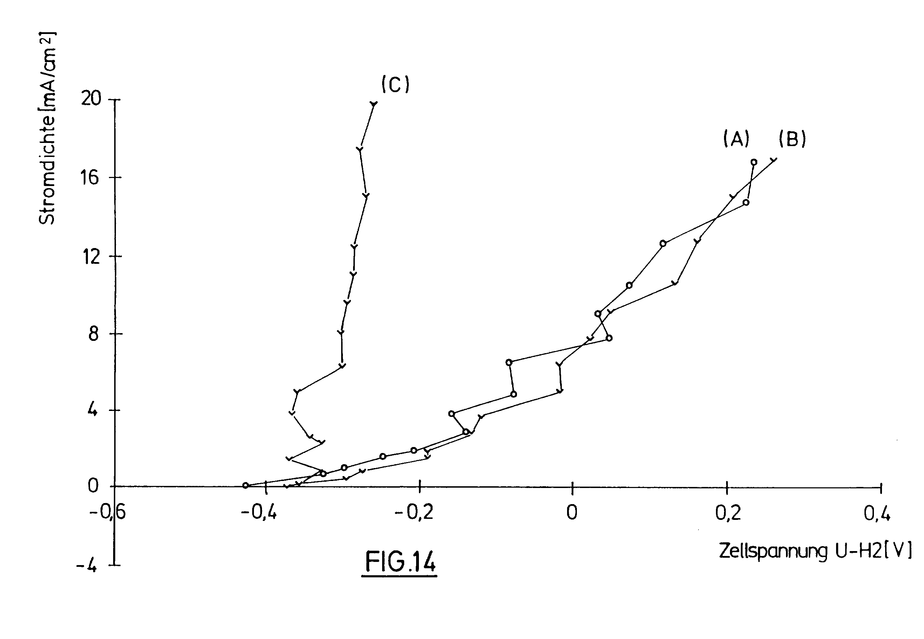

In diesem Beispiel wurden Stahlproben (ST 37) drei Wochen lang bei feuchtem und kühlem Frühlingswetter im Freien aufbewahrt. Auf allen Proben hatte sich in diesem Zeitraum eine dichte braune Rostschicht gebildet. Die verrosteten Proben wurden zwei Tage lang bei ca. 20°C im Labor getrocknet und anschließend leicht mit einer weichen Bürste von lose anhaftendem Rost befreit. Danach wurden die Proben gemäß Beispiel 2 mit reinem Polyanilin beschichtet, wobei die Beschichtung durch 10-maliges Eintauchen in (A) eine Dispersion von Polyanilin in DMSO (Dimethylsulfoxid) und (B) eine Dispersion von Polyanilin in NMP (N-Methylpyrrolidon) hergestellt worden war. Nach der Beschichtung wurden die Proben (A) und (B) 24 Stunden lang gemäß Beispiel 3 passiviert. Die für beide Proben erhaltenen Strom-/Potentialkurven sowie zum Vergleich die einer unbehandelten, bereits verrosteten Stahlprobe (C) sind in Figur 14 wiedergegeben.

Die Kurven zeigen deutlich, daß auch nach bereits erfolgtem Rostansatz noch ein sehr guter Korrosionsschutz mittels des erfindungsgemäßen Verfahrens erzielbar ist.

### Beispiel 17 - Korrosionsschutz bei V2A-Stahl

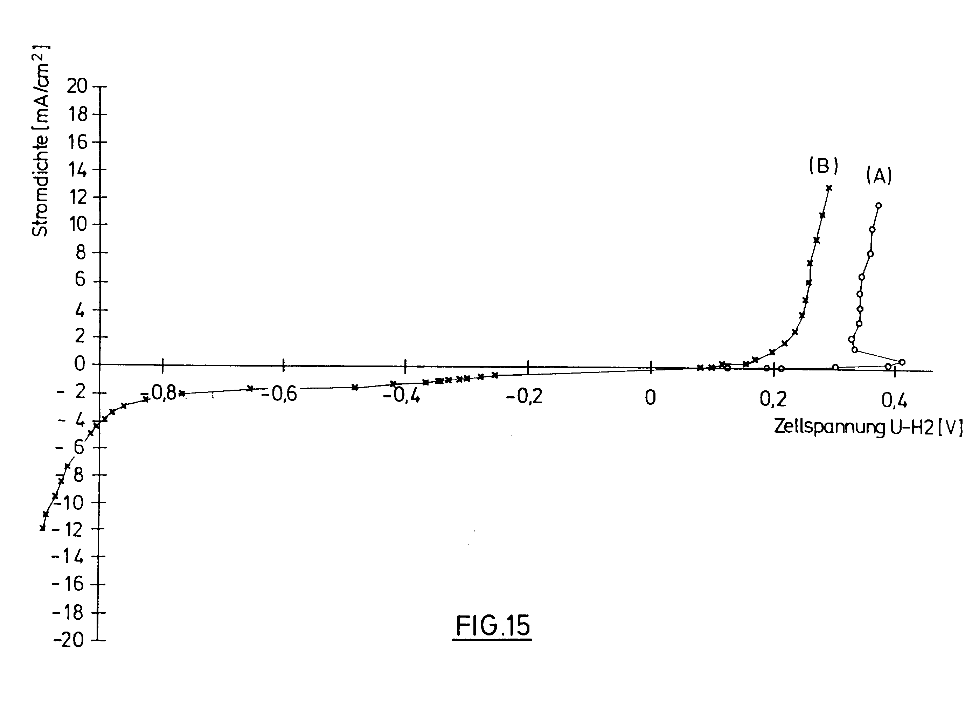

Proben von V2A-Stahl wurden gemäß Beispiel 2 mit reinem Polyanilin beschichtet und gemäß Beispiel 3 passiviert. Die Stromdichte-/Potentialkurven für die so erhaltenen erfindungsgemäßen Werkstücke (A) sowie für solche, die zu Vergleichszwecken unbehandelt blieben, als Werkstücke (B) bezeichnet, sind in Figur 15 wiedergegeben.

Die Kurven zeigen, daß selbst bei einem Edelstahl, wie V2A-Stahl, das erfindungsgemäße Verfahren zu einer deutlichen Verschiebung der Stromdichte-/Potentialkurve zu edleren Potentialen führt.

### Beispiel 18 - Korrosionsschutzwirkung im sauren Milieu

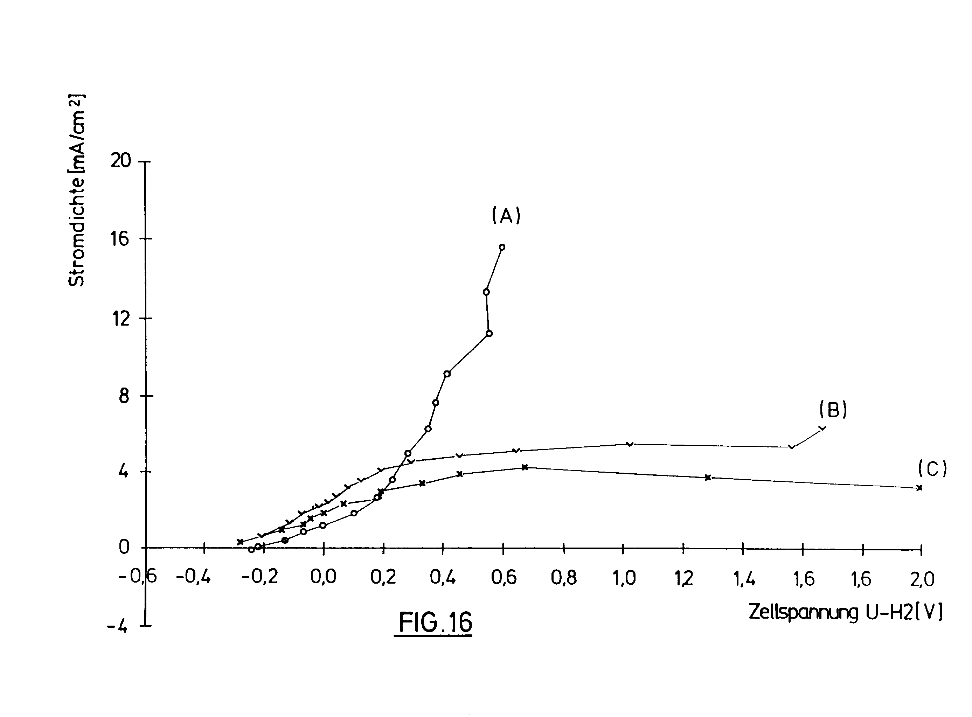

Um die für praktische Anwendungen besonders wichtige Korrosionsschutzwirkung in sauren Medien zu überprüfen, wurden drei Stahlwerkstücke (A), (B) und (C) gemäß Beispiel 10 mit dem dort beschriebenen Lack beschichtet. Anschließend wurden alle Werkstücke gemäß Beispiel 3 passiviert, wobei für (A) und (B) 1 molare wäßrige NaCl-Lösung und für (C) 1 molare wäßrige p-Toluolsulfonsäure-Lösung als Passivierungsmedium eingesetzt wurde. Die Aufnahme der entsprechenden Stromdichte-/Potentialkurven erfolgte dann bei Werkstück (A) in 1 molarer wäßriger NaCl-Lösung und bei den Werkstücken (B) und (C) in 1 molarer wäßriger p-Toluolsulfonsäure-Lösung. Die erhaltenen Kurven sind in Figur 16 wiedergegeben.

Sie belegen, daß die mittels des erfindungsgemäßen Verfahrens hergestellten Werkstoffe noch besser gegenüber einem Korrosionsangriff geschützt sind, wenn dieser in sauren anstelle in neutralen Medien erfolgt.

## Patentansprüche

1. Verfahren zur Herstellung korrosionsgeschützter metallischer Werkstoffe, **dadurch gekennzeichnet**, daß man
(a) aus einer Dispersion eines intrinsisch leitfähigen und wasseraufnahmefähigen Polymer, das ein Redox-Potential gegen Normal-Wasserstoff-Elektrode von -300 bis +1800 mV aufweist, eine Schicht des Polymers auf einen metallischen Werkstoff in nicht-elektrochemischer Weise aufbringt, wobei das Polymer eine Wasseraufnahmefähigkeit von mindestens 0,5 Gew.-%, bezogen auf das Trockengewicht der aufgebrachten Polymerbeschichtung, aufweist und
(b) den gemäß Schritt (a) beschichteten metallischen Werkstoff in Kontakt mit einem Passivierungsmedium mit Gehalt an sauerstoffhaltigem Wasser für einen Zeitraum von mindestens 30 Sekunden und vorzugsweise bis zum Erreichen des Gleichgewichtspotentials bringt,
und man nach Durchlaufen der Schritte (a) und (b)
(c) gegebenenfalls eine Nachpassivierung vornimmt, indem der metallische Werkstoff für eine Dauer von mindestens 1,5 Minuten auf ein Potential gebracht wird, welches um 50 bis 500 mV negativer (gegen Normal-Wasserstoff-Elektrode) ist als das Gleichgewichtspotential des mit dem leitfähigen Polymer beschichteten metallischen Werkstoffs, wobei stromlos oder mit weniger als 2 mA/cm² gearbeitet wird,
(d) gegebenenfalls die Schicht des leitfähigen Polymer entfernt und
(e) gegebenenfalls den metallischen Werkstoff mit einem Korrosionsschutz-Überzug versieht.

2. Verfahren nach Anspruch 1, **dadurch gekennzeichnet**, daß als leitfähiges Polymer Polyanilin verwendet wird.

3. Verfahren nach Anspruch 1 oder 2, **dadurch gekennzeichnet**, daß das leitfähige Polymer eine Wasseraufnahmefähigkeit von mindestens 1 Gew.-%, bezogen auf das Trockengewicht der aufgebrachten Polymer-Beschichtung, aufweist.

4. Verfahren nach einem der Ansprüche 1 bis 3, **dadurch gekennzeichnet**, daß als Passivierungsmedium sauerstoffhaltiges Wasser eingesetzt wird.

5. Verfahren nach Anspruch 4, **dadurch gekennzeichnet**, daß das Wasser eine Leitfähigkeit von mindestens 20 µS aufweist.

6. Verfahren nach einem der Ansprüche 1 bis 5, **dadurch gekennzeichnet**, daß als leitfähiges Polymer ein Polymerblend mit einem Gehalt an intrinsisch leitfähigem Polymer eingesetzt wird.

7. Verfahren nach Anspruch 6, **dadurch gekennzeichnet**, daß der Polymerblend 0,1 bis 45 Gew.-% intrinsisch leitfähiges Polymer enthält.

8. Verfahren nach einem der Ansprüche 1 bis 7, **dadurch gekennzeichnet**, daß als metallischer Werkstoff in Verfahrensschritt (a) ein phosphatierter metallischer Werkstoff eingesetzt wird.

9. Verfahren nach einem der Ansprüche 1 bis 8, **dadurch gekennzeichnet**, daß als metallischer Werkstoff in Verfahrensschritt (a) ein bereits korrodierter metallischer Werkstoff eingesetzt wird.

10. Verfahren nach einem der Ansprüche 1 bis 9, **dadurch gekennzeichnet**, daß das Passivierungsmedium ein zusätzliches Oxidationsmittel oder ein Gemisch von solchen Oxidationsmitteln enthält.

11. Verfahren nach Anspruch 10, **dadurch gekennzeichnet**, daß als zusätzliches Oxidationsmittel Fe(III)-Ionen, Ammoniumperoxodisulfat, Kaliumpermanganat und/oder Wasserstoffperoxid eingesetzt werden.

12. Verwendung eines intrinsisch leitfähigen Polymers zum Schütz von metallischen Werkstoffen vor Korrosion, indem man
(a) aus einer Dispersion eines intrinsisch leitfähigen und wasseraufnahmefähigen Polymer, das ein Redox-Potential gegen Normal-Wasserstoff-Elektrode von -300 bis +1800 mV aufweist, eine Schicht des Polymers auf einen metallischen Werkstoff in nicht-elektrochemischer Weise aufbringt, wobei das Polymer eine Wasseraufnahmefähigkeit von mindestens 0,5 Gew.-%, bezogen auf das Trockengewicht der aufgebrachten Polymerbeschichtung, aufweist und
(b) den gemäß Schritt (a) beschichteten metallischen Werkstoff in Kontakt mit einem Passivierungsmedium mit Gehalt an sauerstoffhaltigem Wasser für einen Zeitraum von mindestens 30 Sekunden und vorzugsweise bis zum Erreichen des Gleichgewichtspotentials bringt,
und man nach Durchlaufen der Schritte (a) und (b)
(c) gegebenenfalls eine Nachpassivierung vornimmt, indem der metallische Werkstoff für eine Dauer von mindestens 1,5 Minuten auf ein Potential gebracht wird, welches um 50 bis 500 mV negativer (gegen Normal-Wasserstoff-Elektrode) ist als das Gleichgewichtspotential des mit dem leitfähigen Polymer beschichteten metallischen Werktoffs, wobei stromlos oder mit weniger als 2 mA/cm² gearbeitet wird,
(d) gegebenenfalls die Schicht des leitfähigen Polymer entfernt und
(e) gegebenenfalls den metallischen Werkstoff mit einem Korrosionsschutz-Überzug versieht.

## Claims

1. Process for producing corrosion-protected metallic materials, characterized in that
(a) from a dispersion of an intrinsically conductive and water-absorptive polymer which has a redox potential relative to the standard hydrogen electrode of from -300 to +1,800 mV a coat of the polymer is applied by non-electrochemical means to a metallic material, the polymer having a water-absorptivity of at least 0.5% by weight, based on the dry weight of the applied polymer coating, and
(b) the metallic material coated in step (a) is brought into contact with a passivating medium comprising oxygen-containing water for a period of at least 30 seconds and preferably until the equilibrium potential is reached,
and, after steps (a) and (b) have been run through,
(c) if desired, a subsequent passivation step is conducted by bringing the metallic material for a period of at least 1.5 minutes to a potential which is from 50 to 500 mV more negative (relative to the standard hydrogen electrode) than the equilibrium potential of the metallic material coated with the conductive polymer, operating with no current or with less than 2 mA/cm²,
(d) if desired, the coat of the conductive polymer is removed, and
(e) if desired, the metallic material is provided with an anticorrosion coating.

2. Process according to Claim 1, characterized in that polyaniline is used as conductive polymer.

3. Process according to Claim 1 or 2, characterized in that the conductive polymer has a water-absorptivity of at least 1% by weight, based on the dry weight of the applied polymer coating.

4. Process according to one of Claims 1 to 3, characterized in that oxygen-containing water is employed as passivating medium.

5. Process according to Claim 4, characterized in that the water has a conductivity of at least 20 µS.

6. Process according to one of Claims 1 to 5, characterized in that a polymer blend comprising intrinsically conductive polymer is employed as conductive polymer.

7. Process according to Claim 6, characterized in that the polymer blend contains from 0.1 to 45% by weight of intrinsically conductive polymer.

8. Process according to one of Claims 1 to 7, characterized in that a phosphated metallic material is employed as metallic material in process step (a).

9. Process according to one of Claims 1 to 8, characterized in that an already corroded metallic material is employed as metallic material in process step (a).

10. Process according to one of Claims 1 to 9, characterized in that the passivating medium comprises an additional oxidizing agent or a mixture of such oxidizing agents.

11. Process according to Claim 10, characterized in that Fe(III) ions, ammonium peroxodisulphate, potassium permanganate and/or hydrogen peroxide are/is employed as additional oxidizing agent.

12. Use of an intrinsically conductive polymer to protect metallic materials against corrosion, wherein
(a) from a dispersion of an intrinsically conductive and water-absorptive polymer which has a redox potential relative to the standard hydrogen electrode of from -300 to +1,800 mV a coat of the polymer is applied by non-electrochemical means to a metallic material, the polymer having a water-absorptivity of at least 0.5% by weight, based on the dry weight of the applied polymer coating, and
(b) the metallic material coated in step (a) is brought into contact with a passivating medium comprising oxygen-containing water for a period of at least 30 seconds and preferably until the equilibrium potential is reached,
and, after steps (a) and (b) have been run through,
(c) if desired, a subsequent passivation step is conducted by bringing the metallic material for a period of at least 1.5 minutes to a potential which is from 50 to 500 mV more negative (relative to the standard hydrogen electrode) than the equilibrium potential of the metallic material coated with the conductive polymer, operating with no current or with less than 2 mA/cm²,
(d) if desired, the coat of the conductive polymer is removed, and
(e) if desired, the metallic material is provided with an anticorrosion coating.

## Revendications

1. Procédé pour la fabrication de matériaux métalliques protégés contre la corrosion, caractérisé en ce que
(a) à partir d'une dispersion d'un polymère intrinsèquement conducteur et absorbant l'eau, qui présente un potentiel redox par rapport à une électrode normale à hydrogène de -300 à +1800 mV, on applique de façon non électrochimique une couche du polymère sur un matériau métallique, le polymère présentant une capacité d'absorption d'eau d'au moins 0,5 % en poids, par rapport au poids sec du revêtement de polymère appliqué, et
(b) on met le matériau métallique, revêtu selon l'étape (a), en contact avec un agent de passivation ayant une teneur en eau contenant de l'oxygène, pendant une durée d'au moins 30 secondes et de préférence jusqu'à ce que soit atteint le potentiel d'équilibre,
et, une fois effectuées les étapes (a) et (b),
(c) on effectue éventuellement une post-passivation en portant le matériau métallique, pendant une durée d'au moins 1,5 minute, à un potentiel qui est plus négatif de 50 à 500 mV (par rapport à une électrode normale à hydrogène) que le potentiel d'équilibre du matériau métallique revêtu du polymère conducteur, en opérant sans courant ou avec moins de 2 mA/cm²,
(d) éventuellement on élimine la couche du polymère conducteur et
(e) éventuellement on munit le matériau métallique d'un revêtement protecteur contre la corrosion.

2. Procédé selon la revendication 1, caractérisé en ce que l'on utilise comme polymère conducteur la polyaniline.

3. Procédé selon la revendication 1 ou 2, caractérisé en ce que le polymère conducteur présente une capacité d'absorption d'eau d'au moins 1 % en poids, par rapport au poids sec du revêtement de polymère appliqué.

4. Procédé selon l'une des revendications 1 à 3, caractérisé en ce que l'on utilise comme agent de passivation de l'eau contenant de l'oxygène.

5. Procédé selon la revendication 4, caractérisé en ce que l'eau présente une conductivité d'au moins 20 µS.

6. Procédé selon l'une des revendications 1 à 5, caractérisé en ce que l'on utilise comme polymère conducteur un alliage de polymères ayant une teneur en polymère intrinsèquement conducteur.

7. Procédé selon la revendication 6, caractérisé en ce que l'alliage de polymères contient de 0,1 à 45 % en poids de polymère intrinsèquement conducteur.

8. Procédé selon l'une des revendications 1 à 7, caractérisé en ce que l'on utilise comme matériau métallique dans l'étape (a) du procédé un matériau métallique phosphaté.

9. Procédé selon l'une des revendications 1 à 8, caractérisé en ce que l'on utilise comme matériau métallique dans l'étape (a) du procédé un matériau métallique déjà corrodé.

10. Procédé selon l'une des revendications 1 à 9, caractérisé en ce que l'agent de passivation contient un oxydant supplémentaire ou un mélange de tels oxydants.

11. Procédé selon la revendication 10, caractérisé en ce que l'on utilise comme oxydant supplémentaire des ions ferriques, du peroxodisulfate d'ammonium, du permanganate de potassium et/ou du peroxyde d'hydrogène.

12. Utilisation d'une protection, par un polymère intrinsèquement conducteur, de matériaux métalliques contre la corrosion, par le fait que
(a) à partir d'une dispersion d'un polymère intrinsèquement conducteur et absorbant l'eau, qui présente un potentiel redox par rapport à une électrode normale à hydrogène de -300 à +1800 mV, on applique de façon non électrochimique une couche du polymère sur un matériau métallique, le polymère présentant une capacité d'absorption d'eau d'au moins 0,5 % en poids, par rapport au poids sec du revêtement de polymère appliqué, et
(b) on met le matériau métallique, revêtu selon l'étape (a), en contact avec un agent de passivation ayant une teneur en eau contenant de l'oxygène, pendant une durée d'au moins 30 secondes et de préférence jusqu'à ce que soit atteint le potentiel d'équilibre,
et, une fois effectuées les étapes (a) et (b),
(c) on effectue éventuellement une post-passivation en portant le matériau métallique, pendant une durée d'au moins 1,5 minute, à un potentiel qui est plus négatif de 50 à 500 mV (par rapport à une électrode normale à hydrogène) que le potentiel d'équilibre du matériau métallique revêtu du polymère conducteur, en opérant sans courant ou avec moins de 2 mA/cm²,
(d) éventuellement on élimine la couche du polymère conducteur et
(e) éventuellement on munit le matériau métallique d'un revêtement protecteur contre la corrosion.
